(19) Europäisches Patentamt
European Patent Office
Office européen des brevets

(11) **EP 3 634 703 B1**

(12) **FASCICULE DE BREVET EUROPEEN**

(45) Date de publication et mention
de la délivrance du brevet:
**23.04.2025   Bulletin 2025/17**

(21) Numéro de dépôt: **18730726.9**

(22) Date de dépôt: **07.06.2018**

(51) Classification Internationale des Brevets (IPC):
**B27K 5/00** *(2006.01)*     **B05D 7/06** *(2006.01)*
**B27K 3/08** *(2006.01)*     **B27K 3/15** *(2006.01)*
**B27K 3/02** *(2006.01)*     **B27K 3/34** *(2006.01)*
**B27K 5/06** *(2006.01)*     **C08H 8/00** *(2010.01)*
**C08L 97/00** *(2006.01)*    **C08H 7/00** *(2011.01)*

(52) Classification Coopérative des Brevets (CPC):
**C08L 97/005; B27K 3/0207; B27K 3/0292;
B27K 3/086; B27K 3/15; B27K 3/346; B27K 5/008;
B27K 5/065; C08H 6/00; C08H 8/00;**
B27K 2240/10; Y02P 20/54

(86) Numéro de dépôt international:
**PCT/EP2018/065047**

(87) Numéro de publication internationale:
**WO 2018/224598 (13.12.2018 Gazette 2018/50)**

(54) **PROCÉDÉ DE DÉLIGNIFICATION PARTIELLE PAR VOIE SUPERCRITIQUE OU SUBCRITIQUE ET DE REMPLISSAGE D'UN MATÉRIAU LIGNO-CELLULOSIQUE**

VERFAHREN ZUR ÜBERKRITISCHEN ODER SUBKRITISCHEN PARTIELLEN DELIGNIFIZIERUNG UND FÜLLUNG EINES LIGNOCELLULOSEMATERIALS

PROCESS FOR SUPERCRITICAL OR SUBCRITICAL PARTIAL DELIGNIFICATION AND FILLING OF A LIGNOCELLULOSIC MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **07.06.2017   FR 1755078**

(43) Date de publication de la demande:
**15.04.2020   Bulletin 2020/16**

(73) Titulaire: **SAS Woodoo
75001 Paris (FR)**

(72) Inventeur: **BOITOUZET, Timothée
75001 Paris (FR)**

(74) Mandataire: **Santarelli
Tour Trinity
1 bis Esplanade de la Défense
92035 Paris La Défense Cedex (FR)**

(56) Documents cités:
**WO-A1-2017/098149     WO-A1-90/02612
DE-A1- 19 714 302     JP-A- 2010 042 604
US-A- 5 169 687**

- LUCE F.: "Delignified impregnated wood", vol.
66, no. 10, 1 October 1944 (1944-10-01), pages
654 - 655, Retrieved from the Internet
<URL:https://archive.org/details/
sim_mechanical-engineering_1944-10_66_10/
page/654/mode/1up> [retrieved on 20220705]

## Description

La présente invention concerne un procédé de traitement de modification de matériau ligno-cellulosique. En particulier, l'invention concerne un procédé de délignification partielle et de remplissage d'une structure de matériau ligno-cellulosique. Le matériau ligno-cellulosique est de préférence du bois. Tout matériau ligno-cellulosique modifié (qualifié de « *composite* ») obtenu par ce procédé est tel que son architecture native a été sensiblement et avantageusement conservée.

## Technique antérieure

Il est connu que certaines propriétés mécaniques du bois, telles que la résistance à la compression et la résistance à la flexion, peuvent être améliorées par imprégnation du bois avec au moins un monomère et/ou polymère. Un tel bois imprégné avec un monomère et/ou un polymère est couramment désigné comme un composite de bois. Il s'agit généralement de bois massif imprégné superficiellement *i.e.* essentiellement sur une faible épaisseur depuis la surface (généralement de 4 à 6 mm de profondeur depuis la surface).

Un procédé connu de production de composite de bois comporte l'immersion du bois à traiter dans un fluide telle qu'une solution aqueuse, dans laquelle est (sont) dissout(s) le monomère et/ou le polymère, et la mise sous pression du fluide, de façon à incorporer le monomère et/ou le polymère dans le bois. Cependant, un tel procédé est long et requiert l'utilisation d'une pression élevée de façon à imprégner le bois en profondeur.

Il a donc été recherché une amélioration de ce procédé, par exemple par utilisation de vide partiel. Cependant, aucune solution satisfaisante n'est apparue, puisque toutes les techniques ainsi envisagées sont pénalisées par leur longue durée, principalement à cause de la difficulté d'imprégner les pores du bois en profondeur.

Il est également connu d'imprégner le bois avec du méthacrylate de méthyle (MMA) puis de polymériser le monomère ainsi imprégné. La polymérisation peut par exemple être effectuée en utilisant des radiations à haute énergie telle que des rayons laser ou des rayons gamma. Cette méthode est lente, et l'utilisation de radiations à haute énergie s'avère particulièrement coûteuse.

D'autre part, il a été proposé dans le document WO 90/02612 d'effectuer une imprégnation de bois par un monomère en milieu acide ou basique (alcalin) grâce à l'utilisation de fluide en phase supercritique. Ce fluide en phase supercritique facilite l'imprégnation du monomère ou du polymère dans le matériau poreux.

Un premier mode de réalisation proposé dans WO 90/02612 comprend l'imprégnation de bois avec un milieu alcalin ou acide en présence d'un premier fluide maintenu dans des conditions supercritiques, la digestion du bois imprégné par ce milieu en présence d'un second fluide maintenu sous conditions supercritiques, de façon à extraire du bois des substances extractibles et de la lignine, qui peuvent ensuite être séparées du fluide. Le bois ainsi obtenu, constitué de fibres essentiellement discrètes, est récupéré puis converti en papier.

Ce premier mode de réalisation est uniquement réservé à des copeaux (« *chips* ») de bois, puisqu'il apparaît qu'une partie très importante, sinon la totalité, de la lignine est extraite du bois, ce qui conduit à détruire l'architecture interne du bois. Ainsi, dans les exemples de WO 90/02612, ces copeaux sont réduits à l'état de pulpe une fois les substances extractibles et la lignine extraites. La pulpe ainsi obtenue, à l'état de fibres discrètes agglomérées en pâte, permet de réaliser des panneaux de bois (de type agglomérés) de qualité supérieure en termes de propriétés mécaniques par rapport à l'état de la technique.

Un second mode de réalisation proposé dans WO 90/02612 comprend le traitement d'un matériau contenant de la cellulose par un premier fluide en phase supercritique, de façon à extraire les substances extractibles (mais pas la lignine) du matériau comportant de la cellulose ; la séparation du fluide contenant les substances extractibles du matériau, de façon à obtenir un matériau comportant moins de substances extractibles ; la mise en contact du matériau contenant la cellulose et moins de substances extractibles avec un second fluide en phase supercritique comprenant un monomère polymérisable, dans des conditions suffisantes pour permettre l'imprégnation du monomère dans le matériau ; la précipitation du monomère à l'intérieur de la cellulose ; et la polymérisation du monomère précipité *in situ*. Ce matériau présenterait des propriétés améliorées. Ce second mode de réalisation est plutôt réservé à des pièces de bois d'une certaine taille. Ainsi, dans les exemples, des morceaux de bois de charpente (« *large blocks or logs* ») sont traités soit avec du MMA, soit avec du styrène.

Cependant, les deux modes de réalisation décrits dans WO 90/02612 ne permettent pas de conserver la micro-architecture du bois tout en permettant qu'un matériau de remplissage remplace suffisamment de lignine. En effet, le traitement selon ce document, soit produit une délignification qui est quasiment totale, et qui conduit à l'obtention de pulpe, soit produit une délignification qui est extrêmement faible, voire nulle.

Plus récemment, le document WO 2010/089604 a décrit l'obtention de pièces de matériau ligno-cellulosique produites par imprégnation du matériau avec une formulation à base d'anhydride acétique à pH acide, puis imprégnation du matériau avec une formulation à base de produit organique aqueux, suivie par une pressurisation de façon à imprégner les deux solutions dans le matériau, puis d'un chauffage de façon à réticuler le matériau organique présent dans le matériau ligno-cellulosique ainsi imprégné. Cela permet de fabriquer une pièce de matériau ligno-cellulosique composite durci. Cependant, le remplissage de la pièce de matériau par le produit organique ne peut être que partiel voire superficiel (*i.e.* sur une faible épaisseur depuis la surface comme expliqué précédemment). Cela implique que le traitement d'une pièce relativement épaisse ne peut donner des propriétés de résistance mécanique améliorées. On entend ici par « relativement épaisse » généralement environ 10,16 cm (4 inches) selon les standards américains USA pour les « *logs* » (morceaux de bois de charpente), voire 27 mm selon les standards des scieries françaises pour les épaisseurs de planches.

WO 2017/098149 A1 décrit un procédé de traitement d'une structure de matériau ligno-cellulosique comprenant:

(1) au moins une étape de trempage de la structure de matériau ligno-cellulosique par au moins un fluide pour dissoudre au moins 40% et au plus 85% en % poids de la lignine présente dans le matériau ;
(2) au moins une étape de lavage de la structure issue de l'étape (1) par au moins un fluide organique de sorte à évacuer la lignine dissoute issue de l'étape de trempage (1), de façon à produire une structure partiellement délignifiée.

Luce F. « Delignified impregnated wood » Mechanical Engineering vol. 66, no. 10, 1er octobre 1944, pages 654-655, décrit des procédés de digestion chimique de placages en bois.

En conséquence, les méthodes connues à ce jour d'imprégnation du bois, ou de tout autre matériau ligno-cellulosique, pour en faire un matériau plus résistant, sont des méthodes compliquées à mettre en œuvre et relativement coûteuses. De plus, leur mise en œuvre est beaucoup trop lente pour pouvoir envisager de façon réaliste une production industrielle d'un matériau composite de bois.

Il reste donc à ce jour le besoin de disposer d'un procédé de traitement d'une structure de matériau ligno-cellulosique, de préférence de bois, de façon à obtenir une structure conservant l'architecture du bois, et constituée d'un matériau à propriétés mécaniques améliorées, en particulier en termes de résistance à la flexion et résistance à la compression, par rapport au matériau ligno-cellulosique avant traitement. Par « *traitement du matériau ligno-cellulosique* », on entend ici traitement de la matière constituant ce matériau.

Un des objectifs de l'invention est de pallier les inconvénients évoqués précédemment des méthodes de traitement de l'état de la technique, et notamment de fournir un procédé de traitement de matériau ligno-cellulosique efficace et réalisable à l'échelle industrielle, qui permette d'obtenir un matériau conservant l'architecture du bois et à propriétés mécaniques, chimiques et/ou optiques améliorées.

**Résumé de l'invention**

L'invention a ainsi pour objet un procédé de traitement d'une structure de matériau ligno-cellulosique, le matériau ligno-cellulosique étant de préférence du bois, ledit procédé comprenant les étapes successives suivantes :

(1) au moins une étape d'extraction de lignine d'une structure de matériau ligno-cellulosique par au moins un fluide en phase supercritique ou subcritique dans une cellule haute pression, la lignine étant partiellement extraite;
(2) au moins une étape de remplissage de la structure partiellement délignifiée par au moins un composé de remplissage, de sorte à produire une structure partiellement délignifiée remplie ; et
(3) au moins une étape de finition de la structure partiellement délignifiée remplie, de sorte à obtenir une structure de matériau composite formée d'un réseau tridimensionnel de composé de remplissage transformé incorporé dans un réseau de cellulose et de lignine,

La masse volumique de la structure de matériau composite obtenue étant supérieure à celle de la structure de matériau ligno-cellulosique avant traitement.

De préférence, à l'étape (1), la lignine est extraite en teneur de 40 à 85%, en % poids, par rapport à la lignine initialement présente dans le matériau.

Le procédé de traitement d'une structure de matériau ligno-cellulosique selon l'invention comprend la combinaison nouvelle et innovante d'une délignification partielle de la structure suivie d'un remplissage par un composé qui est stabilisé au sein de la structure ainsi délignifiée. En particulier, l'utilisation contrôlée d'un fluide en phase supercritique ou subcritique, éventuellement accompagné d'un co-solvant, permet d'améliorer l'étape d'extraction (1).

Cette combinaison des étapes (1) à (3) permet avantageusement l'obtention d'un matériau composite conservant sensiblement la structure du matériau et formé de deux réseaux interpénétrés, dans lequel l'architecture du matériau ligno-cellulosique a été altérée à l'échelle nanoscopique mais sensiblement conservée aux échelles microscopique et macroscopique.

Selon une variante préférée de l'invention, le procédé comporte en outre au moins une étape intermédiaire de fonctionnalisation de la structure partiellement délignifiée issue de l'étape d'extraction (1), située entre l'étape d'extraction (1) et l'étape de remplissage (2). L'étape de remplissage s'effectue alors non sur la structure partiellement délignifiée issue de l'étape d'extraction (1), mais sur la structure partiellement délignifiée issue de l'étape intermédiaire de fonctionnalisation.

La structure de matériau composite obtenue par le procédé selon l'invention comprend de la lignine, de l'hémicellulose, de la cellulose et au moins un composé de remplissage, le matériau composite formant un réseau tridimensionnel de composé de remplissage transformé incorporé dans une structure de cellulose et de lignine. Les propriétés du matériau ligno-cellulosique, qui a été transformé par le procédé selon l'invention en matériau composite, qu'elles soient mécaniques, chimiques et/ou optiques, sont notablement améliorées par rapport au matériau avant traitement.

Un autre des objets de l'invention est une installation apte à la mise en œuvre du procédé selon l'invention.

## Description détaillée de l'invention

### Définitions

Par « *architecture* » du matériau ligno-cellulosique, on entend un ensemble hiérarchisé, d'organisation multi-échelles, à savoir les échelles macroscopique, microscopique, ou nanoscopique, assurant une solidité mécanique à l'ensemble. Tout ou partie de la structure de matériau ligno-cellulosique obtenue par le procédé selon l'invention est issue de l'architecture du bois, dont quelques éléments sont brièvement rappelés ci-après.

A l'échelle atomique, le bois comprend environ 50% d'atomes de carbone, 6% d'atomes d'hydrogène et 40% d'atomes d'oxygène, ainsi que des traces de composés inorganiques et de complexes organométalliques. Plus précisément, le bois est composé de 60 à 75% d'hydrates de carbone sous forme de cellulose et d'hémicelluloses, ainsi que de 18 à 35% de lignine. Les hémicelluloses sont des inclusions périphériques sur des faisceaux de cellulose, la lignine servant de manière anarchique, grâce à ses liaisons chimiques et physiques transversales avec les hémicelluloses, de liaison transversale entre ces faisceaux et donc de soutènement à l'architecture. A l'échelle macroscopique, deux parties se distinguent particulièrement dans le bois : le bois parfait (duramen), de coloration plus foncée, et l'aubier. Ces deux parties présentent des cernes de croissance où l'on distingue bois de printemps et bois d'été, plus foncé.

La cellule végétale, constituée d'une cavité, le lumen, d'une paroi et de canaux intercellulaires de transport de la sève, appelés ponctuations, est l'unité de construction de l'échelle microscopique. À l'état vivant, les cavités des cellules de bois proche de l'écorce de l'arbre assurent le transport de la sève des racines aux extrémités de l'arbre, tandis que les parois assurent les fonctions de résistance mécanique. Les cellules meurent au fur et à mesure de la croissance de l'arbre, n'assurant plus que le soutènement de l'arbre. Les parois de la cellule sont constituées de l'empilement de trois couches distinctes (la lamelle moyenne, la paroi primaire et la paroi secondaire) et aux propriétés physico-chimiques spécifiques. Chacune de ces couches cellulaires est constituée majoritairement de trois polymères : la lignine, la cellulose et les hémicelluloses. La lignine, présente principalement dans la lamelle moyenne de la paroi de la cellule végétale, rend solidaire les fibrilles de cellulose les unes aux autres et assure le maintien de la structure du bois. L'architecture multi-échelle du bois est anisotropique. Elle assure la solidité mécanique et l'opacité de l'ensemble du matériau ligno-cellulosique. L'architecture et la structure microscopique et nanoscopique des composants dépendent du bois considéré.

Les quantités et la qualité respectives de la lignine, de la cellulose et des hémicelluloses sont variables en fonction de la nature du bois et de l'arbre considéré, c'est-à-dire de la partie de l'arbre, de l'environnement et de la maturation de l'arbre considéré. La cellulose est partiellement semi-cristalline tandis que la lignine est amorphe. La lignine est de couleur marron foncé alors que la cellulose et les hémicelluloses sont plutôt de couleur blanche. Ces trois polymères sont enchevêtrés si bien qu'une porosité nanoscopique existe dans le matériau, lieu de présence de molécules appelées extractibles. Bien qu'ancrées dans le matériau (principalement par liaisons physico-chimiques), ces molécules sont indépendantes du réseau constitué par le matériau ligno-cellulosique.

Les « *extractibles* » sont des molécules qui absorbent intensément la lumière visible. Leur présence dans une porosité implique l'existence d'un grand nombre d'interfaces, ce qui a une incidence sur la diffusion et la propagation d'un rayonnement lumineux au sein du matériau. Le terme « *extractibles* » regroupe un très large ensemble de molécules résultant de métabolites secondaires synthétisés lors de la croissance du matériau ligno-cellulosique. Ils sont présents en quantités relativement faibles (entre 5 et 10% en poids) sous forme de mélanges, parfois complexes, et hautement variables, qui sont liés à la nature du matériau ligno-cellulosique. La variabilité de ces molécules (en quantité et en qualité) est importante. La composition du sol et le climat du lieu de pousse d'un matériau ligno-cellulosique considéré influencent grandement l'identité chimique de ce matériau, y compris de ses extractibles.

Les extractibles regroupent des molécules présentant des structures, des fonctionnalités et des propriétés très variées, pouvant être polaires ou apolaires, hydrophiles ou hydrophobes, linéaires, mono-aromatiques ou poly-aromatiques. Parmi les extractibles, on peut citer les composés suivants : des cires et graisses, des terpènes (monoterpènes, diterpènes, triterpènes, sesquiterpènes, acides diterpéniques) et des composés phénoliques (dérivés de phénols, lignanes, stilbènes, flavonoides, biflavonoides, tannins condensés, tannins hydrolysables). Les extractibles assurent une protection chimique supplémentaire du bois. En effet, ils sont souvent impliqués dans les mécanismes de défense du matériau ligno-cellulosique aux attaques extérieures, tels que les champignons, les enzymes, les insectes xylophages, les microbes. Ils sont également à l'origine de l'odeur, en partie de la couleur, ainsi que de la durée de vie intrinsèque du matériau ligno-cellulosique.

D'autre part, l'architecture du matériau ligno-cellulosique est qualifiée de *« native »* (ou *« naturelle »*) quand le matériau, quelle que soit l'échelle d'organisation au niveau de laquelle on l'observe, possède des propriétés similaires à celles rencontrées dans le matériau ligno-cellulosique n'ayant subi aucun traitement.

Le terme *« ancrage chimique »* se rapporte à une liaison moléculaire entre deux composés, tandis que les termes « *ancrage physico-chimique »* se rapportent à une liaison de type hydrogène, van der Waals, ionique ou métallique entre deux composés.

Le terme *« espace de l'architecture du bois »,* également appelé plus simplement *« espace »* ou *« volume »* (correspondant à une absence substantielle de matière) par la suite, se rapporte aux cavités microscopiques du bois et aux ponctuations qui les joignent, remplies de sève dans les cellules vivantes, mais aussi aux espaces nanoscopiques entre les chaînes de polymères enchevêtrés contenus dans les parois des cellules.

Par *« structure de matériau ligno-cellulosique »,* on entend selon l'invention un objet en trois dimensions constitué de matériau ligno-cellulosique, et possédant un certain volume (tridimensionnel) d'au moins 3 cm$^3$ environ, de préférence d'au moins 4 cm$^3$ environ. C'est un objet macroscopique qui a sensiblement conservé l'architecture du matériau ligno-cellulosique natif. Ainsi, de préférence, la structure de matériau ligno-cellulosique comprend au moins une dimension d'au moins 5 mm, de façon préférée d'au moins 2,5 cm, et d'au plus 40 cm. Selon un mode de réalisation préféré, la structure peut s'inscrire virtuellement dans un parallélépipède dont chacune des trois dimensions est d'au moins 5 mm, de façon préférée d'au moins 2,5 cm. Lorsque le matériau ligno-cellulosique est du bois, la structure peut être typiquement une coupe de bois (coupe transversale, coupe longitudinale, coupe radiale) par exemple d'épaisseur 5 à 7 mm voire 18 mm.

Plus précisément, la structure de matériau ligno-cellulosique peut être un élément de finition, un élément de second œuvre ou un élément de premier œuvre.

Par « *élément de finition »,* on entend selon l'invention un objet à trois dimensions dont l'une des dimensions, généralement l'épaisseur, est très inférieure aux deux autres dimensions et typiquement d'au moins environ 0,5 mm, de préférence d'au moins environ 1 mm, de façon encore plus préférée d'au moins environ 2 mm et de façon encore plus préférée d'au moins environ 5 mm. Cet objet est généralement choisi dans le groupe formé par les feuilles de bois, les marqueteries les revêtements, les plaquettes, les plaques et les placages, de préférence les plaquettes et les plaques. Cela correspond sensiblement au terme *« veneer »* en anglais, de préférence « *thick veneer ».*

Par *« élément de second œuvre »,* on entend selon l'invention un objet à trois dimensions dont l'une des dimensions, généralement l'épaisseur, est très inférieure aux deux autres dimensions et typiquement d'au moins environ 10 mm, de préférence d'au moins 18 mm, de façon encore plus préférée d'au moins environ 27 mm. Cet objet correspond typiquement au second œuvre dans le bâtiment, c'est-à-dire qu'il est choisi dans le groupe formé par les bardages, les tasseaux, les lambourdes, les plinthes, les parquets, les cloisons, les panneaux, les couvertures de toit et les menuiseries. Cela correspond sensiblement au terme *« timber »* en anglais.

Par « *élément de premier œuvre »,* on entend selon l'invention un objet à trois dimensions qui est typiquement un élément de construction, et dont la plus petite des trois dimensions est typiquement d'au moins environ 10 cm. Cet objet correspond au premier œuvre (ou gros œuvre) dans le bâtiment, c'est-à-dire qu'il est choisi dans le groupe formé par les poteaux, les poutres, les structures en treillis et les charpentes. Cela correspond sensiblement au terme *« lumber »* en anglais. Cet objet comprend aussi les panneaux de bois lamellés-croisés également dénommés *« panneaux* massifs » (ou *« Cross-Laminated Timber »* d'acronyme CLT en anglais), qui sont des panneaux constitués d'au moins trois plaques monocouches collées les unes sur les autres et disposées à plis croisés, autrement dit perpendiculairement les unes aux autres. En général, les panneaux CLT sont composés de 3 à 7 couches de bois, l'orientation des fibres du bois étant croisée d'une couche par rapport à la ou les couches adjacentes. Ces différentes couches de bois oscillent entre 2 cm et 8 cm d'épaisseur, le panneau atteint lui une épaisseur totale variant de 6 cm pour le plus fin à 28 cm pour le plus épais.

Par *« élément de bâtiment »,* on entend selon l'invention un élément du domaine technique du bâtiment, c'est-à-dire un élément de construction, qui est soit un élément de finition, un élément de second œuvre ou un élément de premier œuvre.

Par « *fluide »,* on entend selon l'invention liquide ou gaz.

Par « *extraction »,* on entend selon l'invention un enlèvement et une évacuation de matière de la structure.

On entend par « *bois vert »* du bois contenant encore des molécules d'eau libres ou liées au réseau cellulaire tel que du bois fraichement abattu. Ainsi, un bois fraichement abattu est un bois contenant généralement 100% d'humidité relative, alors qu'un « *bois humide »* (ou *« bois ressuyé »*) ne contient par définition que des molécules d'eau dans les cavités du réseau cellulaire soit environ 25% d'humidité relative. Un bois vert, lui, contient en général de 40 à 100% d'humidité relative. La mesure de l'humidité (relative) d'un bois est définie par le CNDB (Comité National pour le Développement du Bois) comme le rapport de la masse d'eau qu'il contient sur sa masse anhydre. Elle s'exprime par

la formule suivante

$$\text{Humidité (\%)} = [(\text{Masse humide} - \text{Masse anhydre}) \times 100] / \text{Masse anhydre}.$$

D'après le CNDB, au moment de l'abattage, le bois peut contenir plus d'eau que de matière-bois ; parfois deux fois plus dans certains peupliers. L'humidité relative est alors supérieure à 100%. En effet, les vides cellulaires d'un bois vert sont remplis d'eau libre. Elle s'évacuera progressivement par évaporation, sans que le bois ne subisse de retrait ou de déformation : c'est la phase dite de *« ressuyage ».* Lorsque l'eau libre a entièrement disparu (point de saturation), il ne reste que l'eau liée qui imprègne les membranes des cellules. Le départ de cette eau liée entraîne des phénomènes de retrait et de déformation. Le point de saturation des fibres du bois, en dessous duquel se manifeste le « *jeu* » du bois, est de l'ordre de 30% pour toutes les essences.

Par « *bois sec* », on entend un bois qui a subi un traitement visant à réduire le pourcentage d'eau retenue dans les parois cellulaires, dont le taux d'humidité relative se situe donc en général de 8 à 15%, de préférence de 7 à 12 %.

Par « *A et/ou B* », on entend A, ou B, ou A et B.

On entend par « *% poids* » le pourcentage massique. Sauf précision contraire, tout pourcentage indiqué dans la présente description est un pourcentage en masse.

**Matériau ligno-cellulosique**

De façon particulièrement préférée, le matériau ligno-cellulosique est du bois. Ce bois peut être, selon l'invention, du bois vert, du bois humide ou du bois sec, de préférence du bois vert. Par exemple, ce peut être du bois utilisé après stockage éventuel d'une durée plus ou moins longue (quelques jours à quelques années). Ce bois peut avoir été transformé après abattage, c'est-à-dire avoir été découpé, débité, raboté, libéré de son écorce, de son aubier ou de son duramen, ou être un bois d'ingénierie.

Il est particulièrement avantageux selon l'invention de pouvoir traiter du bois vert voire du bois humide car cela permet de faire l'économie non négligeable d'une étape préalable de séchage du bois. En effet, dans les procédés usuels de traitement du bois, celui-ci est généralement séché en préalable. Cela a pour conséquence qu'environ 20% de matière sont perdus lors du séchage par rétrécissement de la matrice cellulaire. Généralement, pour l'utilisation, par exemple dans le cas d'un parquet, environ 20% de matière supplémentaire sont perdus par la redécoupe du bois pour dégauchir (ou pré-raboter) la pièce de bois suite à cause de la réduction du taux d'hygrométrie (qui passe de 70 % en sortie de scierie à 12 % en sortie de séchoir puis au final à 7% dans le morceau de parquet final). Ce sont ainsi pas loin de 40% de matière qui sont perdus par ces opérations. Le fait de pouvoir traiter du bois vert directement selon l'invention est donc très économe non seulement en quantité d'opérations de traitement à réaliser (économie de main d'œuvre, économie de stockage et économie de temps entre la matière première et le produit fini), mais également par le fait que la perte de matière est bien moindre.

Ce peut être également un bois âgé c'est-à-dire un bois ayant déjà servi comme par exemple du bois de construction. Ainsi, le procédé de l'invention permet avantageusement de recycler, et donc de revaloriser, du bois de construction.

Pratiquement toutes les essences de bois, appelées également familles de bois, dont le taux de lignine est compris entre 15 et 35%, de préférence entre 18 et 32%, de façon encore plus préférée entre 20 et 30%, en poids, peuvent être traitées par le procédé selon l'invention, qu'elles appartiennent à la famille des angiospermes ou des gymnospermes, que ce soit du bois noble de type chêne ou frêne, ou bien du bois plus classique, qu'il soit utilisé dans l'ameublement ou dans le domaine du bâtiment (de la construction) tel que du bois d'ameublement comme le frêne, du bois de construction comme le pin, du hêtre ou du douglas ou du bois plus malléable utilisé pour le tournage de pièces de bois ou le modélisme comme le peuplier ou certaines espèces de balsa.

On peut ainsi citer du bois de résineux tels que les gymnospermes, de façon préférée du sapin, du pin, du douglas, de l'épinette blanche, rouge ou noire, du sapin baumier ou du bois de feuillus tel que du tilleul, du peuplier, du robinier faux-acacia, de l'aulne ou du saule. De façon plus générale, le bois de résineux est choisi parmi dans le groupe formé par le pin sylvestre, le pin, l'épicéa, l'if, le mélèze, le sapin, l'arole, le douglas, l'araucaria, le genévrier, le cèdre, le séquoia, le thuya et le cyprès.

Le bois de feuillus est choisi parmi les angiospermes, de préférence choisi dans le groupe formé par l'aulne, le bouleau, le balsa, le hêtre, le frêne, l'eucalyptus, le bois de cotonnier, l'hévéa, le peuplier, le tremble, le saule, le robinier faux-acacia, le chêne, l'acajou, le guatambu, le fraké, le meranti, le tilleul, le châtaignier, l'érable, le marronnier, l'orme, le noisetier, le noyer, l'oranger des Osages, le platane, le sycomore, le pommier, le poirier, le citronnier et le tulipier, de façon plus préférée l'aulne, le bouleau, le balsa, le hêtre, le frêne, l'eucalyptus, le bois de cotonnier, l'hévéa, le peuplier, le saule, le robinier faux-acacia, le chêne, l'acajou, le tilleul, le châtaignier, l'érable, le marronnier, l'orme, le noisetier, le noyer, l'oranger des Osages et le platane.

Chaque essence ainsi citée peut comprendre de très nombreuses espèces. Ainsi l'essence du pin couvre par exemple plus d'une centaine d'espèces tel que le pin maritime ou le pin sylvestre ; l'essence du chêne couvre de nombreuses sous-essences, tel que le chêne rouge (dit d'Amérique) ou le chêne blanc (dit d'Europe).

Chaque essence de bois possède une architecture et une identité chimique (c'est-à-dire des quantités respectives de lignine et d'hémicelluloses, une longueur des fibres de cellulose, et des extractibles) qui lui sont propres. Au sein d'un même arbre, les différentes parties du bois (tel que l'aubier ou le duramen) peuvent également avoir des propriétés physico-chimiques différentes selon l'essence considérée.

Mais le matériau ligno-cellulosique peut aussi être tout matériau formé d'un réseau tridimensionnel de cellulose, et de lignine, tel que par exemple la paille, les textiles naturels (tels que le lin ou le chanvre), toute la biomasse forestière, incluant le bambou, la pâte à haut rendement, le papier, le carton, et le coton, si tant est que ce matériau est sous forme d'une structure possédant une certaine résistance mécanique et une micro-architecture propre à être valorisée par un composé de remplissage qui remplace partiellement la lignine. Une telle liste comporte les composés fibreux (c'est-à-dire contenant des fibres à l'état natif), tels le chanvre ou le lin, mais également les composés fibrés (c'est-à-dire des produits transformés contenant un ajout de fibres) et les graminées annuelles.

### Etape d'extraction (1)

L'étape d'extraction (1) permet la dissolution partielle et contrôlée d'une partie de la lignine, initialement présente dans le matériau, dans le fluide qui est en phase supercritique ou subcritique, accompagnée d'une évacuation de cette lignine par le fluide. On procède ainsi à une délignification partielle et contrôlée de la structure de matériau ligno-cellulosique. La lignine et le fluide sont ensuite généralement séparés, lors de la dépressurisation du fluide qui était en phase supercritique ou subcritique. Cette séparation permet la récupération d'un composé appelé « *extrait* » comprenant la lignine et d'éventuels extractibles. En d'autres termes, l'étape d'extraction (1) permet de conserver la quantité souhaitée de lignine dans la structure et de ne pas porter significativement atteinte à la micro-architecture du matériau ligno-cellulosique.

La lignine est présente dans l'extrait récupéré en fin d'étape d'extraction (1), le plus souvent sous forme de fragments. En plus des molécules issues de la dégradation de lignine, des produits de dégradation d'autres composants du matériau ligno-cellulosique peuvent se retrouver dans l'extrait, telles des molécules issues de la dégradation des parties amorphes de la cellulose, des sucres simples issus des hémicelluloses périphériques, voire certains extractibles. L'étape d'extraction (1) sert notamment à éviter que la présence des composés dissouts au sein de la structure ne limite le remplissage des espaces existants à l'état natif et ceux créés au cours de la même étape d'extraction (1) par le composé de remplissage au cours de l'étape de remplissage (2).

Un autre des avantages de l'utilisation de fluide en phase supercritique ou subcritique pour l'étape d'extraction (1) est qu'il est possible de procéder au recyclage total ou partiel du fluide après une première utilisation.

La délignification partielle selon l'invention exclut l'obtention d'une pulpe de fibres de matériau ligno-cellulosique.

De façon générale, les fluides en phase supercritique ou subcritique sont caractérisés par de faibles viscosités et des diffusivités élevées. Ils peuvent ainsi avantageusement améliorer le transfert de masse de l'extraction. L'angle de contact d'un composé en phase supercritique avec un substrat est égal à zéro, ce qui implique que le composé *« mouille »* complétement son substrat : de ce fait, le matériau ligno-cellulosique est plus facilement rempli par le fluide de l'étape d'extraction (1) si celui-ci est en phase supercritique. Cela est vrai également lorsque le fluide est en phase subcritique.

L'étape d'extraction (1) permet donc à la fois de conserver suffisamment de lignine (sous forme native ou régénérée après recombinaison des radicaux formés lors de la dégradation de la lignine) au sein du matériau pour préserver l'architecture du matériau ligno-cellulosique natif, et d'extraire suffisamment de lignine grâce au fluide en phase supercritique ou subcritique pour libérer au sein de l'architecture du matériau ligno-cellulosique de l'espace dans lequel va s'insérer le composé de remplissage de l'étape (2). En outre, elle permet également le nettoyage de la lignine et d'éventuels extractibles de lignine résiduelle au sein de la structure. Ainsi, elle ne limite pas le remplissage des espaces existants, microscopiques ou nanoscopiques, ni de ceux nouvellement créés lors de l'étape d'extraction (1), par le composé de remplissage au cours de l'étape de remplissage (2). Une telle limitation pourrait inhiber fortement la propagation des chaînes polymériques par l'action de groupe hydroxyles (OH) aromatique qui bloqueraient les radicaux générés par un catalyseur de polymérisation.

Cela est généralement rendu possible par la modulation et l'optimisation des conditions opératoires d'extraction, accessibles à l'homme du métier. En effet, l'homme du métier est à même d'adapter les conditions opératoires grâce à ses connaissances techniques générales.

L'homme du métier peut, en fin de procédé, procéder à une estimation du degré de délignification atteint au cours du procédé, soit par une analyse qualitative, liée à la couleur de l'extrait (plus l'extrait est de couleur foncée, plus il contient de la lignine sachant que la cellulose et l'hémicellulose sont de couleur blanche) ; soit par une analyse quantitative de la quantité de la lignine récupérée dans l'extrait. Il peut également, en fin de procédé, se baser sur la perte en masse de la structure de matériau ligno-cellulosique, due à l'extraction de la lignine, pour estimer le degré de délignification.

Les conditions opératoires dépendent entre autres de la nature du fluide en phase supercritique ou subcritique.

L'étape d'extraction (1) est généralement réalisée en mode statique ou dynamique, en une ou plusieurs sous-étapes, au moyen d'un ou de plusieurs fluides en phase supercritique ou subcritique.

Par « *mode dynamique* », on entend selon l'invention que le fluide (éventuellement mélangé à un co-solvant) se déplace au cours du procédé dans l'enceinte dans laquelle le précédé est mis en œuvre, de préférence de façon régulière dans le temps (débit constant). Ce mouvement est généralement généré par une pompe opérant en continu, avec recirculation du fluide issu de l'enceinte dans l'enceinte, par exemple après un traitement de purification et/ou de filtration.

Par « *mode statique* », on entend selon l'invention que le fluide (éventuellement mélangé à un co-solvant) n'est pas en mouvement au cours du procédé, mais est quasiment stationnaire dans l'enceinte dans laquelle le procédé est mis en œuvre.

Les conditions opératoires principales d'extraction sont généralement la pression, la température, et la durée, ainsi que la nature et la quantité de co-solvant si un co-solvant est présent. D'autres conditions opératoires non directement liées à l'extraction mais permettant d'optimiser l'étape d'extraction sont la présence (ou non) d'agitation et les paramètres de la structure de matériau ligno-cellulosique telle que sa composition ou l'épaisseur de sa structure. En outre, la mise en phase supercritique ou subcritique du fluide s'effectue généralement en présence de la structure de matériau ligno-cellulosique, par mise sous pression et température. Alors, la vitesse de mise sous pression (*i.e.* pressurisation) ainsi que la vitesse de dépressurisation sont des paramètres à prendre en compte. En effet, ainsi qu'il apparaît immédiatement à l'homme du métier, il ne faut pas procéder de façon trop rapide à la pressurisation et à la dépressurisation, afin d'évacuer la lignine extraite et de ne pas modifier les propriétés physiques et optiques du matériau ligno-cellulosique.

Bien que cela ne soit pas préféré, la délignification peut ne pas être réalisée de façon homogène au sein du matériau ligno-cellulosique, notamment selon les conditions opératoires de l'étape (1). Cela est tout particulièrement le cas lorsque l'épaisseur de la structure de matériau ligno-cellulosique est importante.

L'étape d'extraction (1) est généralement effectuée, selon un mode préféré de l'invention, en utilisant le dioxyde de carbone ($CO_2$) en phase supercritique en mode dynamique ou en mode statique, pendant 1 à 72h, de préférence 2 à 72h, de façon plus préférée de 4 à 24h, à une pression de 8 à 40 MPa (80 à 400 bar), de préférence de 15 à 20 MPa (150 à 200 bar) et à une température comprise entre 35 et 200°C, de préférence entre 50 et 200°C, de façon plus préférée soit entre 160 et 200°C soit entre 140 et 160°C. Dans ce cas, de préférence, l'agitation est généralement de 10 à 100 trs/min (ou « *rpm* » pour « *round per minute* » soit tours par minute), de préférence de 10 à 50 trs/min, la vitesse de pressurisation est généralement de 0,5 à 1 MPa/min (5 à 10 bar/min), de préférence de 0,4 à 0,6 MPa/min (4 à 6 bar/min), et la vitesse de dépressurisation généralement est de 0,2 à 0,5 MPa/min (2 à 5 bar/min), de préférence 0,2 à 0,3 MPa/min (2 à 3 bar/min).

L'agitation au cours de l'étape d'extraction (1) améliore avantageusement la diffusion de la phase fluide au sein du matériau ligno-cellulosique et ainsi l'extraction, que ce soit en mode statique ou en mode dynamique. Elle peut être effectuée par action mécanique ou ondulatoire, telle que sonique.

L'étape d'extraction (1) peut être également effectuée en utilisant l'eau en phase subcritique en mode dynamique ou en mode statique, pendant 0,5 à 4 h, à une pression de 1,2 à 25 MPa (12 à 250 bar), de préférence de 1,2 à 20 MPa (12 à 200 bar) et à une température comprise entre 60 et 180°C, de préférence entre 120 et 180°C. Dans ce cas, l'agitation est généralement de 10 à 100 trs/min, la vitesse de pressurisation est généralement de 0,5 à 1 MPa/min (5 à 10 bar/min) et la vitesse de dépressurisation est généralement de 0,2 à 0,5 MPa/min (2 à 5 bar/min).

L'étape d'extraction (1) peut être également effectuée en utilisant l'isopropanol ou le t-butanol en phase supercritique en mode dynamique ou en mode statique, pendant 0,5 à 8 h, à une pression de 4 à 8 MPa (40 à 80 bar), et à une température comprise entre 185 et 275°C. Dans ce cas, l'agitation est généralement de 10 à 100 trs/min, la vitesse de pressurisation est généralement de 0,5 à 1 MPa/min (5 à 10 bar/min) et la vitesse de dépressurisation est généralement de 0,2 à 0,5 MPa/min (2 à 5 bar/min).

Le fluide en phase supercritique ou subcritique peut comprendre au moins un solvant minoritaire, appelé co-solvant. Le co-solvant est un composé liquide ajouté en faible quantité et miscible audit fluide. Le co-solvant sert généralement à améliorer le pouvoir de solvatation du solvant primaire vis-à-vis de la ou des espèces à dissoudre et à améliorer le gonflement/ la dilatation du matériau ligno-cellulosique. La présence du co-solvant est donc particulièrement avantageuse pour optimiser l'étape d'extraction (1).

Le fluide en phase supercritique ou subcritique est de préférence choisi parmi :

- du dioxyde de carbone $CO_2$ en phase supercritique, de préférence mélangé à au moins un co-solvant polaire choisi parmi le dioxane, l'eau, le méthanol, l'éthanol, l'acide acétique, l'acétone et leurs mélanges ;
- au moins un alcool en phase supercritique, ledit alcool étant choisi parmi le t-butanol (ou tert-butanol ; nom IUPAC 2-méthylpropan-2-ol) et l'isopropanol (nom IUPAC propan-2-ol) ;
- de l'éthanol, de l'acétone ou bien du méthanol en phase subcritique, de préférence mélangé à de l'eau en tant que co-solvant, de façon plus préférée en petite quantité ;
- de l'eau en phase subcritique, de préférence mélangée à au moins une base telle que l'ammoniaque, l'hydroxyde de lithium (LiOH), l'hydroxyde de potassium (KOH), l'hydroxyde de calcium (Ca(OH)$_2$), le carbonate de sodium (Na$_2$CO$_3$), le carbonate de potassium (K$_2$CO$_3$) ou au moins un acide tel que l'acide formique et l'acide acétique.

On parle également de co-solvant pour la base ou l'acide mélangé à l'eau en phase subcritique.

Le co-solvant peut, de préférence doit, être présent, comme indiqué ci-dessus, dans le fluide en phase supercritique ou subcritique. Cependant il peut être introduit dans un réacteur de mise en œuvre de l'étape d'extraction indépendamment du fluide destiné à être mis en phase supercritique ou subcritique. Il peut également être introduit simultanément ou mélangé au fluide destinée à être mis en phase supercritique ou subcritique.

Il est particulièrement préféré selon l'invention l'emploi de fluide dont l'empreinte carbone est minime, comme l'eau ou le dioxyde de carbone. Dans ce cas, la présence d'au moins un co-solvant dans la phase supercritique dans le cas d'utilisation du dioxyde de carbone ou dans la phase subcritique dans le cas de l'utilisation de l'eau est particulièrement avantageuse, car elle permet d'améliorer les conditions d'extraction.

Ainsi, dans le cas d'utilisation du CO$_2$ en phase supercritique, l'ajout d'un co-solvant permet d'améliorer la polarité du fluide en phase supercritique, et par conséquent la solubilité de la lignine (qui est polaire) dans la phase fluide (apolaire), aussi bien que la dilatation des macrofibrilles de cellulose.

Dans le cas de l'utilisation de l'eau subcritique, l'ajout de la base ou de l'acide jouant le rôle de co-solvant permet d'améliorer la dissolution de la lignine et le gonflement/ la dilatation des macrofibrilles de cellulose.

Les coordonnées supercritiques du dioxyde de carbone sont relativement douces, c'est-à-dire au-delà de 31°C et de 7,4 MPa (74 bar). Le dioxyde de carbone en phase supercritique et particulièrement préféré, car il possède un bon pouvoir solvant pour l'extraction des composés apolaires, son moment dipolaire élevé lui permet de dissoudre certaines molécules faiblement polaires, et l'ajout éventuel de co-solvant, de préférence de co-solvant polaire en son sein permet d'améliorer la dissolution des molécules polaires dans ce fluide en phase supercritique.

Les coordonnées subcritiques de l'eau sont en-deçà de 374,3°C et de 22,1 MPa (221 bar). Les avantages, entre autres, de l'utilisation de l'eau subcritique pour l'extraction sont : l'utilisation de matériaux ligno-cellulosique humides sans passer par l'étape de séchage, l'utilisation d'un solvant vert, la limitation de l'extraction de coproduit en améliorant la sélectivité et la réalisation d'une étape d'extraction sans l'ajout de solvant chimique pour prélever des composants faiblement solubles dans l'eau à température et pression ambiante. De plus, l'eau subcritique est l'un des meilleurs solvants propres pour la cellulose car il possède un effet gonflant/dilatant sur les macrofibrilles de la cellulose et solubilise des composés faiblement polaires ce qui facilite l'extraction des composés d'intérêt grâce à ces propriétés modifiées.

Les coordonnées subcritiques de l'éthanol sont en-deçà de 301°C et de 6,1 MPa (61 bar). Les coordonnées subcritiques de l'acétone et du méthanol sont respectivement en-deçà de 235 °C et 4,6 MPa (soit 46 bar), et en-deçà de 239,3 °C et 8,1 MPa (81 bar).

Les cordonnées supercritiques de l'isopropanol sont respectivement de 5,3 MPa (soit 53 bar) et 235°C. Les cordonnées supercritiques du t-butanol sont 3,9 MPa (soit 39 bar) et 233°C. L'utilisation de l'un ou l'autre de ces alcools en phase supercritique est avantageuse pour la solubilisation des produits d'hydrolyse de la lignine ce qui facilite son extraction par la suite.

Le fluide en phase supercritique ou subcritique de l'étape d'extraction (1) est de façon particulièrement préférée le dioxyde de carbone (CO$_2$) en phase supercritique, mélangé à un mélange d'eau et d'éthanol (en tant que co-solvant) dans une proportion comprise entre 5% eau - 95% éthanol et 95% eau - 5% éthanol, de préférence entre 30% eau - 70% éthanol et 70% eau - 30% éthanol, de façon plus préférée égale à environ 50% eau - 50% éthanol (en % volume).

Selon une variante de l'invention, l'étape d'extraction (1) est réalisée en outre en présence d'au moins une enzyme choisie dans le groupe formé par (ou choisie parmi) la laccase, la lignine peroxydase (LiP), la manganèse peroxydase (MnP) et la xylanase, ladite enzyme étant présente dans le fluide en phase supercritique ou subcritique. De façon préférée, ledit fluide en phase supercritique ou subcritique comprend alors en outre au moins un catalyseur choisi parmi le 2,2'-azino-di(3-éthylbenzothiazolin-6-acide sulfonique) (ou ABTS), le 1-hydroxybenzotriazole (HBT), la N-hydroxyphthalimide (HPI), la N-hydroxy-N-phénylacétamide (NHA), la (2,2,6,6-tétraméthylpipéridin-1-yl)oxy (TEMPO), l'acide violurique, et leurs mélanges.

On parle alors d'extraction par traitement enzymatique. Dans ce cas, l'enzyme est utilisée comme catalyseur de l'extraction, car elle permet de faciliter la dégradation de la lignine au sein du matériau. L'enzyme est généralement véhiculée par un fluide appelé fluide porteur, qui est le plus souvent le fluide destiné à être mis en phase supercritique ou subcritique. L'enzyme est plus généralement mise en solution. Par « *solution* » on entend le mélange d'un soluté, qui est un élément chimique sous forme solide, liquide ou gazeuse, dissout dans un solvant, qui est un élément chimique liquide). Le fluide porteur peut être lui-même transporté par un autre fluide, généralement miscible, qui peut être le fluide destiné à être mis en phase supercritique ou subcritique, qui présente des caractéristiques différentes, l'ensemble formant ainsi le plus souvent un système complexe, par exemple micellaire ou bi-phasique.

L'étape d'extraction (1) par traitement enzymatique se fait généralement en une seule étape, le plus souvent en plaçant l'enzyme avec le matériau et en introduisant directement le fluide destiné à être mis en phase supercritique. Il est préféré dans ce cas qu'il ait été procédé au préalable à une étape de prétraitement du matériau afin de le préparer au traitement enzymatique. Sans vouloir être lié par une quelconque théorie, le demandeur pense que cette étape de prétraitement sert à chasser l'air et l'eau du matériau ligno-cellulosique de façon à permettre une meilleure pénétration de l'enzyme dans l'étape ultérieure. Une telle étape préalable peut être une étape de prétraitement par au moins un fluide en phase supercritique ou subcritique, en mode statique ou en mode dynamique, dans des conditions de pression de 0,8 à 40 MPa (8 à 400 bar), de température de 32 à 200°C et pendant une durée de 15min à 72h.

L'étape de traitement enzymatique se fait généralement selon les conditions opératoires de l'étape d'extraction (1) explicitées ci-avant, un des paramètres opératoires importants étant en outre la nature et la concentration de l'enzyme ainsi que la nature et la concentration du catalyseur éventuel tel que l'HBT.

L'étape de traitement enzymatique permet l'extraction de la lignine et d'autres composés éventuellement dissouts et présents dans le matériau ligno-cellulosique, dans la solution contenant l'enzyme qui est récupérée à la fin de l'extraction, que ce soit en mode statique ou en mode dynamique.

La délignification partielle réalisée à l'étape d'extraction (1) peut éventuellement servir, bien que ce ne soit pas son objectif premier, à extraire, outre la lignine, d'autres composants du matériau ligno-cellulosique tels les extractibles.

La quantité de lignine extraite du matériau ligno-cellulosique dépend principalement des conditions opératoires du traitement (principalement mode, durée, température, pression, voire éventuellement agitation, vitesse de pressurisation et vitesse de dépressurisation, voire en cas de présence d'enzyme de la concentration de l'enzyme et de l'utilisation ou non d'un catalyseur tel que l'HBT). Mais elle dépend également de la nature du matériau concerné, selon qu'il s'agit par exemple d'un bois de résineux, d'un bois de feuillus ou d'une graminée annuelle.

Ainsi, dans le cas où le matériau ligno-cellulosique est du bois de résineux, c'est généralement de 50 à 85%, de préférence de 50 à 75%, en % poids, de la lignine présente dans la structure qui est extraite au cours de l'étape d'extraction (1). En revanche, dans le cas où le matériau ligno-cellulosique est du bois de feuillus, c'est généralement de 40 à 60%, de préférence de 45 à 55%, en % poids, de la lignine présente dans la structure qui est extraite au cours de l'étape d'extraction (1). L'homme du métier est à même d'adapter la conduite de l'étape (1) selon la structure concernée et la nature du matériau ligno-cellulosique.

En pratique, le fluide destiné à être mis en phase supercritique ou subcritique est introduit dans une cellule haute pression, qui contient la structure de matériau ligno-cellulosique, afin d'atteindre les conditions de température et de pression désirées qui permettront à ce fluide d'être mis en phase supercritique ou subcritique.

Par « *cellule haute pression* », on entend selon l'invention une cellule ou enceinte qui résiste à des pressions et températures élevées et dans laquelle on peut réaliser une extraction en phase supercritique ou subcritique.

Le co-solvant, s'il est présent, est généralement introduit au même temps que la structure de matériau ligno-cellulosique dans la cellule haute pression lorsque l'étape d'extraction (1) est réalisée en statique.

Lorsque l'étape d'extraction (1) est réalisée en mode dynamique, le co-solvant éventuellement présent est généralement introduit en continu dans la cellule haute pression en parallèle de l'introduction en continu du fluide destiné à être mis en phase supercritique ou subcritique.

Lors de cette étape d'extraction (1), le fluide en phase supercritique diffuse au sein du matériau ligno-cellulosique et gonfle et dilate ainsi les macrofibrilles de cellulose du matériau tout en solubilisant partiellement la lignine. Cela conduit à une production des fragments de lignine à bas poids moléculaire et leurs dissolutions dans le fluide en phase supercritique ou subcritique éventuellement mélangé au co-solvant. La présence de co-solvant organique (mélange eau/éthanol par exemple dans le cas du dioxyde de carbone en phase supercritique) favorise ces effets.

A la fin de cette étape d'extraction (1), le fluide en phase supercritique ou subcritique est généralement évacué d'une manière contrôlée de la cellule haute pression, typiquement au moyen d'une dépressurisation contrôlée afin de ne pas abîmer la structure du bois, et l'extrait qui contient la lignine est récupéré. Avantageusement, le matériau ligno-cellulosique ainsi traité garde assez de lignine pour préserver sa structure et ses propriétés chimiques, mécaniques et optiques.

La lignine dissoute qui est extraite de la structure de matériau ligno-cellulosique joue un rôle essentiel dans le cadre du procédé de l'invention. Comme expliqué précédemment, d'autres composés peuvent être dissouts et extraits, voire simplement extraits, du matériau ligno-cellulosique au cours de l'étape d'extraction (1).

Selon le procédé de l'invention, la lignine dissoute récupérée dans le fluide de l'étape d'extraction (1) est généralement pure car le fluide en phase supercritique ou subcritique préserve avantageusement la lignine lors de l'extraction sans la modifier chimiquement. Cette lignine dissoute est de préférence utilisée dans un procédé de valorisation de la lignine, généralement sur le plan industriel, pour la fabrication d'un matériau de construction, d'un matériau utilisé en aéronautique, d'un matériau d'emballage, d'un biocarburant, d'un composé pharmaceutique et/ou, de préférence ou, d'un composé chimique. On peut ainsi utiliser la lignine pour la valoriser en fibre de carbone (par combinaison aromatique), béton fibré, emballages, biocarburants (par méthanisation), médicaments, et composants chimiques (acide férulique notamment) et arômes (vanilline), mais également pour des applications à plus haute valeur ajoutée telle que l'extraction de molécules aromatiques en tant que synthons de base dans des domaines variés de la chimie (polymères, synthèse de précurseurs...). La lignine peut également être utilisée par le biais de différentes pâtes (telle que kraft, pâte à papier, pâte alcaline ou pâte au sulfite) dans le domaine de l'emballage. Cela confère au procédé selon l'invention un caractère de procédé écologique (ou procédé *« green »),* en évitant au maximum la production de déchets non recyclables.

Il est également possible de procéder dans le cadre de l'invention, d'après ce qui a été envisagé dans la littérature, à des utilisations de la lignine extraite du fluide de l'étape d'extraction (1) dans les domaines aussi variés que :

- le bioraffinage (produits de combustion, gaz synthétique, bioéthanol) ;
- les produits de spécialités chimiques biologiques (dérivés aromatiques tels que vanilline, benzène, xylène, DMBQ (2,6-diméthoxy-1,4-benzoquinone), syringaldéhyde, syringol, acide vanillique, acide sinapinique, p-hydroxybenzaldéhyde, 3-éthylphénol, 2-méthylphénol, 3-méthoxycatéchol, acide férulique ; gaz tels que dioxyde de carbone, monoxyde de carbone, méthane ou méthanol) ;
- les composés de spécialité (fibre de carbone de basse qualité ou de qualité moyenne pour applications tels que aérospatiale, automobile, motocycles, avions, moulins à vent, freins ou canne à pêche ; additifs pour asphalte ; additifs pour ciment ; et agents émulsifiants) ; et
- les matériaux divers et variés (produits plastiques tels que les résines phénoliques, les résines époxy, les mousses lignine-polyuréthane ; produits caoutchouteux tels que les revêtements élastomères lignine-polyuréthane ; produits adhésifs ; produits pour panneaux de bois de type aggloméré ; produits de nutrition animale tels que comprimés ou liants ; produits inflammables tels que allumettes ou liquides pour barbecue).

De même, les composés extraits autres que la lignine sont de préférence utilisés dans un procédé de valorisation, tel un procédé de valorisation des sucres ou de molécules aromatiques ou fonctionnelles, généralement sur le plan industriel. Pour certaines de ces applications, ces composés extraits doivent subir des étapes de post-traitement, tels des purifications et/ou des fractionnements, avant leur utilisation dans lesdites applications.

**Etape intermédiaire optionnelle de fonctionnalisation**

L'étape intermédiaire optionnelle de fonctionnalisation, située entre l'étape d'extraction (1) et l'étape de remplissage (2), a pour but d'ajuster les propriétés chimiques et physiques, tout particulièrement les propriétés hydrophiles ou bien hydrophobes du matériau ligno-cellulosique délignifié, dans le but d'améliorer l'étape de remplissage (2) voire l'étape de finition (3). En effet, une telle fonctionnalisation permet d'augmenter l'affinité du matériau ligno-cellulosique délignifié envers le composé de remplissage, respectivement hydrophile ou bien hydrophobe, et améliore ainsi les propriétés de greffage du composé de remplissage avec les composants du matériau ligno-cellulosique dans l'étape (2) de remplissage. De plus, la fonctionnalisation permet généralement d'améliorer les propriétés mécaniques du matériau ligno-cellulosique et de le rendre moins sensible à l'humidité du milieu.

L'étape de fonctionnalisation peut ainsi être une étape d'activation des groupes hydroxyles ou bien une étape d'oxydation. Par *« activation des groupes hydroxyles »* on entend ici toute réaction en présence d'un co-réactif organique présentant une fonction suffisamment électrophile pour permettre la création d'un lien C-O, entre un carbone du co-réactif et un oxygène de groupement hydroxyle.

La fonctionnalisation peut également consister en tout autre traitement propre à optimiser l'action de l'étape de remplissage (2).

L'étape de fonctionnalisation peut être réalisée par voie conventionnelle (c'est-à-dire ni en phase supercritique ni en phase subcritique), ou bien de préférence, en phase supercritique ou subcritique. Par « *voie conventionnelle »* on entend une utilisation principale d'au moins un solvant organique le plus souvent par trempage ou bain.

Le fluide en phase supercritique ou subcritique est généralement tel que le composé de remplissage est soluble dans le fluide en phase supercritique ou subcritique.

Ainsi, le fluide en phase supercritique ou subcritique utilisé à l'étape intermédiaire de fonctionnalisation est de préférence choisi parmi :

- du dioxyde de carbone $CO_2$ en phase supercritique, de préférence mélangé à au moins un co-solvant polaire choisi parmi le dioxane, l'eau, le méthanol, l'éthanol, l'acide acétique, l'acétone et leurs mélanges ;
- de l'eau en phase subcritique, de préférence mélangée à au moins une base telle que l'ammoniaque, l'hydroxyde de lithium (LiOH), l'hydroxyde de potassium (KOH), l'hydroxyde de calcium ($Ca(OH)_2$), le carbonate de sodium ($Na_2CO_3$), le carbonate de potassium ($K_2CO_3$) ou au moins un acide tel que l'acide formique et l'acide acétique.

Les conditions opératoires d'utilisation de ces fluides sont celles indiquées pour ces fluides dans l'étape d'extraction (1), à savoir que l'étape intermédiaire est réalisée :

- soit en utilisant le dioxyde de carbone ($CO_2$) en phase supercritique en mode dynamique ou en mode statique, pendant 1 à 72h, de préférence 2 à 72h, à une pression de 8 à 40 MPa (80 à 400 bar), et à une température comprise entre 35 et 200°C, de préférence entre 50 et 200°C. Dans ce cas, de préférence, l'agitation est généralement de 10 à 100 trs/min, la vitesse de pressurisation est généralement de 0,5 à 1 MPa/min (5 à 10 bar/min) et la vitesse de dépressurisation généralement est de 0,2 à 0,5 MPa/min (2 à 5 bar/min) ;

- Soit en utilisant l'eau en phase subcritique en mode dynamique ou en mode statique, pendant 0,5 à 4 h, à une pression de 1,2 à 25 MPa (12 à 250 bar), de préférence de 1,2 à 20 MPa (12 à 200 bar), et à une température comprise entre 120 et 180°C. Dans ce cas, l'agitation est généralement de 10 à 100 trs/min, la vitesse de pressurisation est généralement de 0,5 à 1 MPa/min (5 à 10 bar/min) et la vitesse de

dépressurisation est généralement de 0,2 à 0,5 MPa/min (2 à 5 bar/min).

De manière encore plus préférée, la fonctionnalisation est réalisée par voie supercritique en utilisant plus particulièrement le dioxyde de carbone ($CO_2$) en phase supercritique en mode statique ou dynamique, sous pression de 8 à 20 MPa (80 à 200 bar), de température de 32 à 200°C, sous agitation (de vitesse typiquement de 10 à 100 trs/min), en présence ou non d'un co-solvant tel que l'éthanol, et pour une durée de 0,5 à 4h. Dans ce cas, la vitesse de pressurisation et la vitesse de dépressurisation du fluide sont de préférence contrôlées lors de l'étape de fonctionnalisation : elles sont alors respectivement de 0,5 à 1 MPa/min (5 à 10 bar/min) et de 0,2 à 0,5 MPa/min (2 à 5 bar/min).

L'estérification et l'éthérification par méthylation, carboxyméthylation et/ou hydroxypropylation du matériau ligno-cellulosique sont généralement des fonctionnalisations selon l'invention. Leur mise en œuvre est accessible à l'homme du métier.

L'estérification peut être une réaction des hydroxyles en position C2, C3 et C6 de la cellulose avec un dérivé d'halogénure d'acide, de type bromure de bromoisobutyrate, ou bien une ouverture d'un cycle anhydride tel que l'anhydride succimique, l'anhydride maléique ou l'anhydride glutarique. La carboxymethylation est un cas spécifique de la réaction de la cellulose avec un anhydride, tel l'anhydride acétique, qui permet de fonctionnaliser la cellulose par un acétate et donc de former de l'acétate de cellulose.

L'éthérification peut être une réaction d'hydroxyles de la cellulose avec des composés de type halogénure organique, tel que le bromure de propargyle, le chorure de trityle ou l'épichloridrine. L'étherification peut également être réalisée par ouverture d'époxyde tels l'oxyde de propylène (de nom IUPAC 2-methyloxirane), le 1,2-époxybutane (de nom IUPAC 2-éthyloxirane), le 1,2 époxypentane (de nom IUPAC 2-propyloxirane), le 2,3-époxy(propyl)benzène (de nom IUPAC (Phénylméthyl)oxirane), l'oxyde de triméthylène (de nom IUPAC oxétane), le glycidole (de nom IUPAC Oxiranylméthanol).

De manière préférée, la fonctionnalisation du matériau ligno-cellulosique délignifié a pour but d'introduire des fonctions hydrophiles sur les fibrilles de cellulose, par un traitement oxydatif. Ce traitement oxydatif peut se faire notamment par un traitement à l'ozone, au peroxyde d'hydrogène ou au (2,2,6,6-tétraméthylpipéridin-1-yl)oxy (ou TEMPO), de préférence à l'ozone ou au TEMPO, par voie conventionnelle, supercritique ou subcritique.

Un cas préféré de l'étape de fonctionnalisation est le traitement du matériau ligno-cellulosique issu de l'étape d'extraction (1) en utilisant l'ozone en phase supercritique. Dans un exemple de réalisation, l'ozone sous forme liquide est évaporé et ensuite condensé à -196°C dans un autoclave, qui est ensuite chauffé doucement jusqu'à la température ambiante (environ 20°C) (i.e. typiquement avec une rampe de température de 1°C/min (soit 3h36) à 5°C/min (soit 43 min). L'autoclave qui contient l'ozone est ensuite alimenté par un fluide, par exemple dans le cas du $CO_2$, afin d'atteindre une pression de 1 MPa (10 bar). Le mélange $CO_2/O_3$ est ensuite transféré dans une cellule haute pression qui contient un matériau ligno-cellulosique délignifié issu de l'étape d'extraction (1). La cellule haute pression est alors pressurisée (c'est-à-dire mise sous pression) afin d'atteindre la certaine pression de travail préalablement définie. La cellule haute pression est ensuite chauffée et alimentée encore une fois par le fluide destiné à être mis en phase supercritique ou subcritique, par exemple le $CO_2$, pour atteindre la pression et température souhaitées et mettre ledit fluide en phase supercritique ou subcritique. A la fin de cette étape de fonctionnalisation, d'une durée par exemple de 2h, la cellule haute pression est dépressurisée (c'est-à-dire qu'on la ramène à atmosphère ambiante), ce qui permet de récupérer le matériau délignifié ainsi traité.


**Etape de remplissage (2)**

L'étape de remplissage (2) est une étape au cours de laquelle le remplissage de la structure partiellement délignifiée ou bien partiellement délignifiée et éventuellement fonctionnalisée par le composé de remplissage est effectué, c'est-à-dire que l'on fait pénétrer le composé de remplissage dans la structure partiellement délignifiée ou bien partiellement délignifiée et éventuellement fonctionnalisée.

Elle peut être réalisée en une ou plusieurs sous-étapes. Le composé de remplissage doit le plus souvent avoir la propriété de se lier aux fibres du matériau ligno-cellulosique encore présentes au sein de la structure, par ancrage chimique ou physico-chimique.

L'étape de remplissage (2) peut être réalisée en au moins une série d'au moins deux sous-étapes successives, chaque sous-étape étant effectuée par remplissage, par exemple par le même fluide ou par un fluide différent par sous-étape, ou par augmentation progressive des concentrations du même fluide en composé de remplissage au cours des sous-étapes.

La mise au point des conditions de remplissage est à la portée de l'homme du métier.

L'étape de remplissage (2) peut être effectuée par injection du composé de remplissage par le vide ou sous pression par une technique de type RTM (pour « *Resin Transfer Molding* » soit « *Moulage par injection de résine* à *basse pression»*) ou RTM Light (pour « *allégé* »), par infusion du composé de remplissage par une technique de type RIFT (pour « *Resin Infusion under Flexible Tooling* » qui pourrait se traduire par « *infusion de résine par outillage flexible* »), par procédé sous vide ou sous pression ou par procédé utilisant une phase supercritique dans un réacteur, autoclave ou four sous vide ou par trempage dans une cuve ou tout autre appareil que l'homme du métier sait apte à effectuer cette étape.

Il peut être recommandé d'alterner au moins une sous-étape de phase sous vide avec au moins une sous-étape de phase sous pression pour bien imprégner le matériau ligno-cellulosique. En effet, cette alternance favorise la pénétration du composé de remplissage au sein du matériau du fait de la différence de pression ainsi créée.

Selon un mode de réalisation particulièrement préférée selon l'invention, l'étape de remplissage (2) est réalisée grâce à un fluide en phase supercritique ou subcritique, pouvant comprendre un co-solvant comme explicité à l'étape (1). On parle dans ce cas d'« *imprégnation* » plutôt que de remplissage. Dans ce cas, l'étape de remplissage (2) est généralement réalisée dans une cellule haute pression en présence d'au moins un fluide en phase supercritique ou subcritique dans lequel le composé de remplissage est solubilisé.

Le fluide en phase supercritique ou subcritique peut être choisi parmi les fluides utilisés selon l'étape d'extraction (1). Cependant, ici, un paramètre important est la solubilité du composé de remplissage dans le fluide en phase supercritique ou subcritique.

Ainsi, le fluide en phase supercritique ou subcritique utilisé à l'étape (2) est de préférence choisi parmi :

- du dioxyde de carbone $CO_2$ en phase supercritique, de préférence mélangé à au moins un co-solvant polaire choisi parmi le dioxane, l'eau, le méthanol, l'éthanol, l'acide acétique, l'acétone et leurs mélanges ;
- au moins un alcool en phase supercritique, ledit alcool étant choisi parmi le t-butanol (ou tert-butanol ; nom IUPAC 2-méthylpropan-2-ol) et l'isopropanol (nom IUPAC propan-2-ol) ;
- de l'éthanol, de l'acétone ou bien du méthanol en phase subcritique, de préférence mélangé à de l'eau en tant que co-solvant, de préférence en petite quantité ;
- de l'eau en phase subcritique, de préférence mélangée à au moins une base telle que l'ammoniaque, l'hydroxyde de lithium (LiOH), l'hydroxyde de potassium (KOH), l'hydroxyde de calcium (Ca(OH)$_2$), le carbonate de sodium (Na$_2$CO$_3$), le carbonate de potassium (K$_2$CO$_3$) ou au moins un acide tel que l'acide formique et l'acide acétique.

Le co-solvant peut, de préférence doit, être présent, comme indiqué ci-dessus, dans le fluide en phase supercritique ou subcritique. Cependant il peut être introduit dans un réacteur de mise en œuvre de l'étape de remplissage indépendamment du fluide destiné à être mis en phase supercritique. Il peut également être introduit simultanément ou mélangé au fluide destinée à être mis en phase supercritique.

Les conditions opératoires d'utilisation de ces fluides sont généralement les suivantes :

- soit en utilisant le dioxyde de carbone (CO$_2$) en phase supercritique en mode dynamique ou en mode statique, pendant 2 à 72h, à une pression de 8 à 40 MPa (80 à 400 bar), et à une température comprise entre 50 et 200°C. Dans ce cas, de préférence, l'agitation est généralement de 10 à 100 trs/min (pour « *round per minute* » soit tours par minute), la vitesse de pressurisation est généralement de 0,5 à 1 MPa/min (5 à 10 bar/min) et la vitesse de dépressurisation généralement est de 0,2 à 0,5 MPa/min (2 à 5 bar/min) ;
- Soit en utilisant l'eau en phase subcritique en mode dynamique ou en mode statique, pendant 0,5 à 4 h, à une pression de 1,2 à 25 MPa (12 à 250 bar), et à une température comprise entre 120 et 180°C. Dans ce cas, l'agitation est généralement de 10 à 100 trs/min, la vitesse de pressurisation est généralement de 0,5 à 1 MPa/min (5 à 10 bar/min) et la vitesse de dépressurisation est généralement de 0,2 à 0,5 MPa/min (2 à 5 bar/min) ;
- Soit en utilisant l'éthanol, l'acétone ou le méthanol en phase subcritique en mode dynamique ou en mode statique, pendant 0,5 à 4 h, à une pression de 0,5 à 4,5 MPa (5 à 45 bar), et à une température comprise entre 40 et 230°C. Dans ce cas, l'agitation est généralement de 10 à 100 trs/min, la vitesse de pressurisation est généralement de 0,5 à 1 MPa/min (5 à 10 bar/min) et la vitesse de dépressurisation est généralement de 0,2 à 0,5 MPa/min (2 à 5 bar/min) ;
- Soit en utilisant l'isopropanol ou le t-butanol en phase supercritique en mode dynamique ou en mode statique, pendant 0,5 à 8h, à une pression de 4 à 8 MPa (40 à 80 bar), et à une température comprise entre 185 et 275°C. Dans ce cas, l'agitation est généralement de 10 à 100 trs/min, la vitesse de pressurisation est généralement de 0,5 à 1 MPa/min (5 à 10 bar/min) et la vitesse de dépressurisation est généralement de 0,2 à 0,5 MPa/min (2 à 5 bar/min).

De manière encore plus préférée, l'étape de remplissage (2) est réalisée par voie supercritique en utilisant plus particulièrement le doxyde de carbone (CO$_2$) en phase supercritique dans des conditions de pression de 8 à 40 MPa (80 à 400 bar), de température de 32 à 200°C, sous agitation (de vitesse typiquement de 10 à 100 trs/min et en présence ou non d'un co-solvant tel que l'eau ou l'éthanol. Dans ce cas, la vitesse de pressurisation et la vitesse de dépressurisation du fluide sont de préférence contrôlées lors de l'étape de remplissage (2) : elles sont alors respectivement de 0,5 à 1 MPa/min (5 à 10 bar/min) et de 0,2 à 0,5 MPa/min (2 à 5 bar/min).

Selon un mode de réalisation particulièrement préféré, l'étape de remplissage (2) est réalisée en présence d'au moins un fluide en phase supercritique ou subcritique dans lequel le composé de remplissage est solubilisé. Ainsi, la structure de matériau ligno-cellulosique partiellement délignifiée et éventuellement fonctionnalisée est imprégnée par ce mélange de fluides. Pour ce faire, un volume donné de composé de remplissage est utilisé afin d'assurer le remplissage de la structure dans un autoclave. Ce volume est déterminé en prenant en compte le retrait de l'oxygène présent dans les cavités du matériau ligno-cellulosique et la possible transformation du composé en cas de mise sous vide et/ou de chauffage.

Selon un des modes de réalisation qui sera explicité dans les exemples, un fluide destiné à être mis en phase supercritique ou subcritique est introduit dans une enceinte de type saturateur dans laquelle est préalablement introduit au moins un composé de remplissage, afin de solubiliser ultérieurement le composé de remplissage sous des conditions opératoires dans lesquelles le fluide en phase supercritique ou subcritique.

Par *« saturateur »,* on entend selon l'invention une cellule (ou réacteur) qui résiste à des pressions et températures assez élevées et qui permet de solubiliser complétement un substrat (tel qu'un co-solvant par exemple) dans un fluide en phase supercritique ou subcritique.

Le fluide en phase supercritique ou subcritique est ensuite introduit dans une cellule haute pression qui contient préalablement une structure de matériau ligno-cellulosique délignifiée et le composé de remplissage de façon à réaliser l'étape de remplissage (2) (qui est dans ce cas une imprégnation) de la structure partiellement délignifiée dans le polymère ou co-polymère liquide.

L'étape de remplissage (2) du procédé de traitement selon l'invention peut être effectuée essentiellement selon deux modes de réalisation, explicités ci-après, chacun de ces deux modes étant de préférence réalisé en présence d'un fluide en phase supercritique ou subcritique. Ces deux modes peuvent être adaptés en fonction du matériau ligno-cellulosique utilisé.

Ainsi, selon un premier mode de réalisation de l'étape de remplissage (2), le composé de remplissage est un polymère ou un co-polymère, formulé ou non, le plus souvent, préalablement à la mise en contact avec la structure de matériau ligno-cellulosique, déposé dans une enceinte de type saturateur pour favoriser sa solubilisation dans le fluide destiné à être mis en phase supercritique ou subcritique.

Il est préférable d'employer un polymère ou co-polymère thermoplastique, auquel cas la température de l'étape de remplissage (2) est généralement supérieure à la température de transition vitreuse de ce polymère ou co-polymère. Dans ce cas, l'étape subséquente de finition (3) consistera en une mise au repos sous température inférieure à la température de transition vitreuse du polymère ou co-polymère. Cela suppose que le polymère ou co-polymère possède une température de transition vitreuse supérieure à la température de l'étape de finition (3).

De préférence, le polymère ou co-polymère est choisi dans le groupe formé par les polyacrylates, les polyamides (tels que les Nylons® de DuPont), les polyesters, les fluoropolymères (tel que le Teflon® de DuPont), le polyéthylène, le polypropylène, le polybutène, le polystyrène, le poly(oxyde de phénylène), le poly(chlorure de vinyle), le poly(chlorure de vinylidène), le polycarbonate, le poly(acide lactique), les polyéthersulfones, les polyétherimides, les polyaryléthercétones, les matériaux sol-gel inorganiques ou organiques tel que les polymères d'Ormosil (pour « organically modified silica » ou « organically modified silicates » c'est-à-dire silicates ou silices modifiés de façon organique), les silicones, et leurs combinaisons ; ainsi que dans le groupe formé par les polymères et co-polymères, non énumérés ci-dessus et obtenus à partir des monomères du second mode de réalisation dont la liste est donnée ci-après. De la cellulose, de l'amidon, des polypeptides, des protéines, ainsi que des polymères dérivés de ces composés, tel l'acétate de cellulose ou l'acétate d'amidon, formulés ou non, peuvent être utilisés dans ce mode de réalisation.

Le composé de remplissage de l'étape de remplissage (2) peut également être un vitrimère, généralement obtenu à partir de polymères thermodurcissables (tel que l'époxy) et/ou de polymères thermoplastiques (tel que le poly(méthacrylate de méthyle), le polystyrène ou bien le polyéthylène haute densité).

Selon l'invention, on considère qu'un vitrimère est un polymère, entrant dans le premier mode de réalisation de l'étape de remplissage (2).

Par « vitrimère » on entend selon l'invention une nouvelle catégorie de matériau organique qui peut être qualifié de polymère. Ainsi, un vitrimère est un polymère léger et résistant qui, une fois durci, peut être refondu et remoulé comme le verre tout en présentant des propriétés mécaniques supérieures à celles du verre. Il allie donc les qualités des composés thermoplastiques (qui peuvent être refondus et remoulés donc recyclés) et celles des composés thermodurcissables qui présentent de bonnes propriétés mécaniques, chimiques et thermiques, mais qui ne peuvent pas être réutilisés.

Les vitrimères peuvent être synthétisés par exemple par des réactions de métathèse entre les dioxaborolanes (composés contenant une atome de bore lié à 2 atomes d'oxygène) et des polymères (tel que le poly(méthacrylate de méthyle) ou le polystyrène) contenant uniquement des liaisons chimiques carbone-carbone dans leur squelette sans addition de catalyseurs à des températures modérées de l'ordre de 60 °C.

Cette réaction est généralement rapide et efficace, les composés obtenus présentant des propriétés chimiques, mécaniques et thermiques supérieures aux polymères de départ. Elle ne nécessite pas de catalyseur, ce qui constitue un réel avantage économique et écologique.

On entend par « métathèse » des changements de liaisons entre atomes conduisant sur le plan formel à des composés chimiques dans lesquels les liaisons des différents types sont quasiment en même nombre et de même nature que dans les composés de départ.

Selon le second mode de réalisation de l'étape de remplissage (2), le composé de remplissage de l'étape de remplissage (2) est un monomère polymérisable présent dans une solution monomérique ou dans une formulation monomérique aux conditions de pression et de température de l'étape de remplissage (2).

De préférence, le composé de remplissage de l'étape de remplissage (2) est un monomère présent dans une solution monomérique polymérisable aux conditions de pression et de température de l'étape de remplissage (2), la solution monomérique comprenant en outre au moins un catalyseur. Un tel monomère polymérisable conduit généralement à l'obtention d'un (polymère) thermoplastique ou d'un (polymère) thermodurcissable.

Les composés de remplissage peuvent donc comprendre des monomères, sous forme de solutions monomériques voire de formulations monomériques. Les solutions et formulations monomériques peuvent être des produits commerciaux connus de l'homme du métier.

De façon générale, il est recommandé d'éviter l'utilisation d'un composé de remplissage qui présente le risque de générer des sous-produits volatils et/ou non liés à la structure du matériau composite.

On entend par « *solution monomérique* » un mélange d'un ou plusieurs monomères, avec ou sans agent activant la polymérisation de ces monomères. De façon particulièrement préférée, l'étape de remplissage (2) est réalisée en présence d'un fluide en phase supercritique ou subcritique dans lequel est solubilisée une solution monomérique comprenant le composé de remplissage. Ainsi, la structure de matériau ligno-cellulosique partiellement délignifiée et éventuellement fonctionnalisée est imprégnée par ces fluides.

On entend par « *formulation monomérique* » une solution monomérique contenant au moins un composé supplémentaire. Un tel composé supplémentaire est généralement choisi parmi les oligomères, les polymères, les copolymères en ce qui concerne les thermoplastiques, ou les pré-polymères et les pré-co-polymères accompagnés d'au moins un durcisseur pour les thermodurcissables. Ce composé supplémentaire peut également être un agent qui permet la polymérisation tel qu'un initiateur (par exemple un initiateur biosourcé comme l'épichlorydrine, les acides carboxyliques, les amines, et leurs mélanges), un catalyseur, de façon préférée thermiquement activable ou dégradable par rayonnement, une charge, un tensioactif, un retardateur ou un inhibiteur de polymérisation, un agent de transfert de chaînes, ou bien un mélange de ces composés.

Le plus souvent, la charge, si elle est présente, est organique ou minérale. La charge minérale est généralement choisie dans le groupe formé par les alumines, les argiles, les poudres de carbone, les billes de verre, les diamants, le gypsum, le calcaire, le mica, la perlite, le quartz, le sable, le talc, la silice, le titane et leurs mélanges, de préférence choisie dans le groupe formé par les argiles, les diamants, les billes de verre, le gypsum, le calcaire, le mica, la perlite, le quartz, le sable, le talc et leurs mélanges. La charge minérale peut être fonctionnalisée pour accroitre sa dispersion et sa stabilité dans la formulation monomérique de remplissage. Au moins un tensioactif peut être ajouté à cette fin également.

Le catalyseur est choisi de façon à catalyser, de préférence, une réaction de polymérisation radicalaire. Ce choix dépend généralement, ainsi qu'il est connu de l'homme du métier, outre du monomère, du mode de polymérisation et de son contrôle.

Le catalyseur est de préférence choisi dans le groupe formé par les composés de type azo de formule R-N=N-R', où R et R' sont des groupes alkyles comprenant éventuellement au moins une fonction supplémentaire, tel que l'azobisisobutyronitrile, les peroxydes, les composés alkyle (comprenant généralement de 1 à 6 atomes de carbone par molécule), halogénés (c'est-à-dire comprenant un atome d'halogène qui est du chlore, du brome, de l'iode ou du fluor), les nitroxydes, les composés thio carbonyl thio, et leurs mélanges. Mais tout autre catalyseur connu de l'homme du métier est également envisageable, tel que le peroxyde de cétone, le peroxyde d'hydrogène le peroxycétal, l'hydroperoxyde, le peroxyde de dialkyle, le peroxyde de diacyle, les peroxyesters, les peroxy dicarbonates, tels que le peroxyde de benzoyle, le méthyl éthyl cétone peroxyde, le cumène hydroperoxyde, le persulfate de potassium, le peroxynéodécanoate tert-butyle, le peroxypivalate de tert-butyle, le peroxy-2-éthylhexanoate de tert-butyl, le peroxyisobutyrate de tert-butyle, le 1,1-bis-tert-butylperoxy-3,3,5-trimethylcyclohexane, le peroxylaurate de tert-butyle, le peroxyisophthalate de tert-butyle, le peroxyacétate de tert-butyle, le peroxybenzoate de tert-butyle, le peroxyde de dicumyle, le peroxyde de di-tert-butyle et leurs mélanges.

Selon ce second mode de réalisation de l'étape de remplissage (2), la solution monomérique ou la formulation monomérique de l'étape de remplissage (2) peut comprendre en outre au moins un agent plastifiant qui peut être un solvant, un oligomère voire une charge visant à diminuer la viscosité du composé de remplissage et à permettre ainsi une meilleure pénétration du composé de remplissage au sein de la structure ligno-cellulosique du matériau.

Si l'agent plastifiant est un solvant, celui-ci est généralement choisi de telle sorte qu'il s'évapore en grande partie à température ambiante de façon à limiter l'émission de composé organique volatile pendant la durée de vie de la structure de matériau composite. En effet, l'utilisation de solution monomérique ou de formulation monomérique contenant un solvant peu volatil n'est pas préférée, dans le cadre de la présente invention dans la mesure où l'imprégnation d'un solvant dans la structure du matériau ligno-cellulosique peut conduire à la création de molécules non greffées et emprisonnées dans la structure de matériau composite qui pourraient être progressivement relâchées. Si l'agent plastifiant est un oligomère, celui-ci est choisi de telle sorte qu'il s'ancre durablement au sens de la structure afin d'éviter tout relargage ultérieur.

Au moins un agent de préservation de la structure du matériau composite final, tel un absorbeur de rayons UV, peut également être ajouté à la formulation monomérique de remplissage. Cela permet d'améliorer la tenue de celle-ci dans la structure. On peut choisir un tel agent parmi des composés chromophores tels que l'anthraquinone, des composés à base de motif benzophénone ou benzotriazole, d'acrylate de diphényle, et tout ou partie des composés extraits au cours de l'étape d'extraction (1), et leurs mélanges.

Au moins un composé ignifuge, fongicide, bactéricide ou insecticide peut également être ajouté, afin de renforcer les propriétés de la structure de matériau composite final. Les composés ignifuges comprennent le trihydrate d'aluminium, le trioxyde d'antimoine, le pentoxyde d'antimoine et les composés organophosphorés, et tout ou partie des composés extraits au cours d'extraction (1), et leurs mélanges.

La formulation monomérique de remplissage peut comprendre en outre au moins un agent de polarité choisi dans le groupe formé par l'éthanol, l'éthylène glycol, le méthyl éther, la N-méthyl pyrrolidone, les dioxanes, le diméthylformamide, le diéthylène glycol, le diméthyl éther de diéthylène glycol, la pyridine, la n-butylamine, la pipéridine, la morpholine, la 4-picoline, la 2-picoline, la diéthylamine, l'aniline, l'acétone, et le méthanol.

La présence d'un tel agent de polarité permet avantageusement une meilleure pénétration du composé de remplissage au sein de la structure ligno-cellulosique ainsi qu'un gonflement de la matrice ligno-cellulosique. En effet, la présence de ces agents de polarité perturbe les ponts hydrogènes de la cellulose et gonfle/dilate ainsi les macrofibrilles de la cellulose ce qui entraîne une meilleure diffusion du composé de remplissage.

Le monomère peut être est de préférence choisi parmi les monomères issus du pétrole (appelés pétro-sourcés) parmi lesquels les méthacrylates, tels que le méthacrylate d'éthyle, le méthacrylate de méthyle, le méthacrylate de propyle, le méthacrylate de butyle, le méthacrylate d'hexyle, le méthacrylate d'octyle, le méthacrylate lauryle, le méthacrylate de 2-éthylhexyl, le méthacrylate de cyclohexyle, le méthacrylate de glycidyle ; les acrylates tel que l'acrylate d'éthyle ; les phtalates tels que les dialkylphtalates où l'alkyle comprend par exemple de 1 à 6 atomes de carbone ; les nitriles tel que l'acrylonitrile ; le styrène et les dérivés styréniques tel que l'$\alpha$-méthylstyrène, le chorostyrène, le styrène, le tert-butyl styrène, le vinyltoluène ; les composés vinyliques tel que l'acétate de vinyle, le chlorure de vinyle et le proprionate de vinyle ; les composés insaturés contenant un groupe carboxyle tels que l'acide acrylique, l'acide fumarique, l'acide maléique, l'acide méthacrylique ; les composés éthyléniques tel que l'éthylène glycol ou l'oxyde d'éthylène ; le butadiène ; l'isoprène ; les monomères insaturés contenant un atome de nitrogène, tels que l'acrylamide, l'acrylonitrile, la N-butoxydiméthylacrylamide, la vinylpyridine ; et leurs mélanges. Ces monomères conduisent généralement à la formation de polymères thermoplastiques.

On peut également citer des monomères conduisant à la formation de polymères thermodurcissables comme des composés pétrosourcés parmi lesquels des précurseurs de résine thermodurcissable tels que des précurseurs de résines époxy, comme les pré-polymères époxydés dérivés de bisphénol tel que le bisphénol A diglycidyl éther (BADGE en français plus connu sous son acronyme anglais DGEBA), ou tout bisphénol époxydé, ainsi que le méthacrylate de glycidyl ou l'éther d'allyl glycidyl, les précurseurs de résines oxétane, les précurseurs de résines phénoliques, les précurseurs de résines urée, les précurseurs de résine uréthane, les précurseurs de résines acryliques; et leurs mélanges. Dans ce cas, au moins un durcisseur est généralement présent dans le composé de remplissage. Le durcisseur peut être tout durcisseur de résine thermodurcissable connu de l'homme du métier telle qu'une amine aliphatique, comme l'isophoronediamine, ou cyclique, un acide carboxylique, un anhydride ou un liquide ionique.

On peut citer également des monomères biosourcés conduisant à la formation de polymères thermoplastiques ou thermodurcissables, identiques aux monomères issus du pétrole ou bien différents, parmi lesquels les tannins, comme les flavan-3-ol (afzelechine, gallocatéchine, catéchine) et les terpènes ; le resvératrol ; le résorcinol ; le glycérol et les dérivés du glycérol comme l'épichlorydrine, les isomères du propanediol et l'acide glycolique ; les dérivés des sucres (isosorbide, sorbitol polyglycidyl éther, tréhalose, D-glyceraldéhyde, D-thréose, D-érythrose, D-arabinose, D-ribose, D-mannose, D-glucose) ; les dérivés du furfural (généralement issu de la dépolymérisation acide de l'hémicellulose) ; les dérivés de l'acide maléique ou fumarique ; les dérivés des acides lactique et formique ; les monomères issus d'huile végétale et de corps gras (noix de cajou, carthame, colza, lin, olive, soja, huile de ricin) tels que l'acide sébacique (ricin), la cardanol (noix de cajou), l'acide linoléique (issu du lin), l'acide vernonia (issu de graines de vernonia) ; les acides hydroxyalcanoïques, comme ceux dérivés des acides formique, lactique et sébacique; le bio-éthylène (ou éthylène biologique) ; le bio-éthylène glycol (ou éthyène glycol biologique) ; le bio-propylène (ou propylène biologique) ; le bio-1,4-butanediol (ou 1,4 butanediol biologique); les dérivés de la lignine, tel que l'acide téréphtalique, l'acide gallique, la vanilline ; les dérivés de la vanilline comme la vanillylamine, la méthoxyhydroquinone de diglycidylether, la triglycidylether de vanillylamine ; et leurs mélanges, tels que des monomères issus d'une combinaison de dérivés de sucre et de corps gras.

Par « biosourcé » on entend qualifier une molécule dont tout ou partie, c'est-à-dire de 10 à 90 %, de préférence de 10 à 30 %, des atomes constitutifs sont issus d'une ressource provenant de la biomasse, et ne résultant pas de la transformation anthropique d'une ressource fossile.

On peut également citer des monomères biosourcés hybrides conduisant à la formation de polymères thermoplastiques ou thermodurcissables, identiques aux monomères biosourcés. On entend par composé *« biosourcé hybride »* un composé biosourcé dont une partie de la structure a réagi avec une molécule dont les atomes ne proviennent pas de ressources issues de la biomasse.

Par « *dérivé de X* », on entend selon l'invention composé synthétisé à partir du composé X par une courte séquence de réactions chimiques gardant essentiellement l'identité (c'est-à-dire la structure chimique principale) du composé X, tel qu'un ajout d'une fonction ou une augmentation de la longueur de chaîne carbonée (i.e. un ajout de chaîne carbonée) ou une oxydation ou une réduction ou une substitution nucléophile ou une ouverture de cycle.

De façon encore plus préférée, la solution monomérique ou formulation monomérique, de préférence la solution monomérique, de l'étape de remplissage (2) comprend au moins un monomère choisi parmi :

- les monomères issus du pétrole parmi lesquels les méthacrylates, tels que le méthacrylate de butyle, le méthacrylate de méthyle, le méthacrylate d'éthyle, le méthacrylate de glycidyl , le méthacrylate de tri-n-butyl étain ; les phtalates tels que les dialkylphtalates ; les nitriles tel que l'acrylonitrile ; le styrène et les dérivés styréniques tel que le tert-butyl styrène et le chorostyrène ; les composés vinyliques tel que l'acétate de vinyle, le chlorure de vinyle et le proprionate de vinyle ; les composés éthyléniques tel que l'éthylène glycol ou l'oxyde d'éthylène ; le butadiène ; l'isoprène ; et leurs mélanges ; et
- les monomères biosourcés parmi lesquels les terpènes ; le glycérol et les dérivés du glycérol le plus souvent obtenus après réaction avec au moins un composé parmi l'épichlorydrine, les isomères du propanediol et l'acide glycolique ; les dérivés des sucres ; les dérivés du furfural (généralement issu de la dépolymérisation acide des hémicelluloses) ; les dérivés des acides lactique et formique ; les monomères issus de l'huile de ricin (ou *« castor oil »)* tel que l'acide sébacique ; les acides hydroxyalcanoïques, comme ceux dérivés des acides formique, lactique et sébacique; le bio-éthylène (ou éthylène biologique) ; le bio-éthylène glycol (ou éthylène glycol biologique) ; le bio-propylène (ou propylène biologique) ; le bio-1,4-butanediol (ou 1,4-butanediol biologique); les dérivés de la lignine, tel que l'acide téréphtalique; et leurs mélanges ;

et leurs mélanges.

L'avantage d'utiliser des monomères biosourcés, en particulier s'ils sont biodégradables, est qu'il est possible soit de les récupérer ultérieurement lors du recyclage du matériau composite en fin de vie soit de faciliter la destruction du matériau composite en fin de vie. Cela permet donc d'obtenir un matériau composite partiellement ou totalement recyclable, ce qui confère au procédé selon l'invention un caractère de procédé à développement durable voire écologique (procédé « green »).

Selon une variante du second mode de réalisation de l'étape de remplissage (2), le composé de remplissage est constitué de deux monomères véhiculés au sein du matériau ligno-cellulosique par exemple par un fluide en phase supercritique ou subcritique. Ces monomères conduisent à la fabrication d'un polymère thermodurcissable dans l'étape de finition (3), qui consiste dans ce cas en une polymérisation et une réticulation.

Un exemple de second mode de réalisation est que l'étape de remplissage (2) comporte une étape éventuelle d'ajout d'un co-solvant (par exemple de l'éthanol, de préférence 50% monomère - 50% éthanol) à un fluide en phase supercritique ou subcritique dans un saturateur, dans lequel est présent une solution monomérique. Ce mélange fluide / co-solvant/ mnomère est introduit ensuite dans une cellule haute pression qui contient une structure de matériau ligno-cellulosique délignifiée déposée sur un support poreux tel qu'un fritté. La phase fluide solubilise la solution monomérique et cette phase fluide contenant le(s) monomère(s) diffuse à l'intérieur de la structure de matériau ligno-cellulosique délignifiée, qui dilate / gonfle. L'affinité ente le(s) monomère(s) et le matériau ligno-cellulosique favorise l'imprégnation et la dispersion moléculaire du ou des monomères au sein du matériau ligno-cellulosique. Un coefficient de partage élevé est préféré, qui présente une grande affinité entre le(s) monomère(s) et le matériau ligno-cellulosique.

A la fin de cette étape d'imprégnation, la cellule haute pression est dépressurisée lentement à l'aide d'une vanne de dépressurisation et le matériau ligno-cellulosque ainsi rempli (ou imprégné), avec le ou les monomères d'une manière homogène tout en gardant sa structure et ses propriétés, est récupéré. Selon une variante du second mode de réalisation de l'étape de remplissage (2), le ou les monomères est (sont) tel(s) qu'une fois la polymérisation effectuée, le polymère possède sensiblement la même densité optique que celle de la cellulose.

L'indice de réfraction du polymère ainsi obtenu est typiquement compris dans une fourchette de 1,35 à 1,70, plus précisément entre 1,44 et 1,65, et encore plus précisément entre 1,52 et 1,60, et est souvent pris autour de 1,47, 1,53, 1,56 ou 1,59, avec une variation possible autour de ces valeurs de l'ordre de 10%. Il peut également être, dans un mode de réalisation différent, typiquement compris dans une fourchette de 1,40 à 1,60, par exemple d'environ 1,47.

**Etape de finition (3)**

L'étape de finition (3) est une étape au cours de laquelle le composé de remplissage de la structure partiellement délignifiée remplie issue de l'étape de remplissage (2) est fixé dans la structure, ce qui permet d'obtenir une structure de matériau composite formée d'un réseau tridimensionnel de composé de remplissage transformé incorporé dans un réseau de cellulose et de lignine. Le « *composé de remplissage transformé* » est le composé obtenu à l'issue de l'étape de finition (3).

Elle s'effectue de différentes manières, en particulier en fonction du mode de réalisation de l'étape de remplissage (2) (premier mode de réalisation ou second mode de réalisation). Elle peut être effectuée en une ou plusieurs sous-étapes. Elle peut être effectuée selon un mode stationnaire ou par paliers.

Cette étape de finition (3) est donc une étape de fixation du composé de remplissage, de préférence par polymérisation et/ou réticulation lorsque le composé de remplissage comporte au moins un monomère, souvent présent sous la forme d'une solution ou formulation de remplissage. Cette polymérisation et/ou réticulation s'effectue notamment de façon telle que les fibres du matériau ligno-cellulosique sont liées au composé de remplissage transformé après achèvement de l'étape de finition (3) par ancrage chimique, physique ou physico-chimique. L'homme de métier est capable de déterminer la formulation de sa solution de remplissage pour obtenir l'ancrage désiré lors de l'étape de finition. Lorsque le composé de remplissage est un polymère (y compris un vitrimère), cette étape de finition consiste simplement en la récupération du matériau rempli issu de l'étape de remplissage (2), aux conditions de pression atmosphérique et de température ambiante.

Comme expliqué précédemment, le terme *« ancrage »* se rapporte à une création de liaisons moléculaires. La structuration de chaînes de polymères au sein de l'architecture du matériau ligno-cellulosique s'effectue soit par des liaisons covalentes, auquel cas un réseau chimiquement réticulé est obtenu, soit par des liaisons faibles ou des interactions, de type liaisons hydrogène, de van der Waals, auquel cas un réseau physique est obtenu, ou bien par un mélange des deux types de liaisons.

Le composé de remplissage forme ainsi un polymère qui peut ainsi appartenir à la famille des polymères thermoplastiques ou des polymères thermodurcissables. De tels polymères peuvent être choisi dans le groupe formé par les résines acryliques, les résines aminoplastes, les résines diallyl phtalate, les résines époxy telles que les résines époxy Spurr (comme par exemple le produit commercial EM300 vendu par la société Sigma-Aldrich), les résines mélamines, les résines méthacrylique, les résines oxétane, les résines phénoliques, les résines polyacétal, les résines polyamides, les résines polycarbonates aromatiques et aliphatiques, les polyesters aromatiques et aliphatiques, les résines polyfluorés, les résines polyphénylène éther, les résines polyimides, les résines polyoléfines aromatiques et aliphatiques, les résines polysulfonés, les résines styréniques et les polyuréthane, et leurs combinaisons. L'ancrage du composé de remplissage s'effectue de différentes manières, en particulier en fonction du mode de réalisation de l'étape de remplissage (2).

Ainsi, lorsque l'étape de remplissage (2) est effectuée selon son premier mode de réalisation, c'est-à-dire que le composé de remplissage est un polymère ou un co-polymère de préférence thermoplastique ou un vitrimère, l'étape de finition (3) consiste à figer (ou fixer), le plus possible, le polymère ou copolymère ou vitrimère au sein de la structure pour son utilisation ultérieure. En d'autres termes, l'étape de finition (3) consiste à mettre ledit polymère ou co-polymère ou vitrimère dans un état physique tel qu'il ne peut pratiquement pas quitter la structure dans les conditions de température et de pression considérées. Ces conditions de température et de pression dépendent essentiellement de l'utilisation ultérieure qui sera faite de la structure de matériau composite, à savoir typiquement si elle est destinée à être placée en extérieur (auquel cas le climat de l'endroit de l'utilisation doit être pris en considération) ou en intérieur. En général, cela se traduit par une mise sous température inférieure à la température transition vitreuse du polymère ou co-polymère.

Ainsi, lorsque l'étape de remplissage (2) est effectuée selon son second mode de réalisation, c'est-à-dire que le composé de remplissage est un monomère polymérisable présent dans une solution monomérique, l'étape de finition (3) consiste à polymériser le monomère en présence du catalyseur. Cela s'effectue généralement par toute technique de polymérisation envisageable, telle que la voie thermique, la voie UV, ou la voie plasma. Le choix de la technique dépend essentiellement de la nature du catalyseur de polymérisation, ainsi qu'il est connu de l'homme du métier.

Par exemple, la solution monomérique comprend du méthacrylate de butyle et du styrène en proportion d'une part de méthacrylate de butyle pour 3 parts de styrène, et le catalyseur présent à l'étape de finition (3) est de l'azoisobutyronitrile à raison de 0,05 part. Dans ce cas, l'étape de finition (3) peut être effectuée par chauffage à température de 15°C à 80°C, par exemple de 40°C, sous vide ou sous atmosphère dénuée d'oxygène, ou bien sous atmosphère dénuée d'oxygène, pendant 20 à 50 heures, durant environ 24 heures.

Lorsque le polymère ou co-polymère obtenu est thermodurcissable, l'étape de remplissage (2) s'est effectuée à l'état liquide et à température supérieure à la plage de températures à laquelle la réticulation se met en place et ledit polymère ou co-polymère commence à durcir. Alors, l'étape de finition (3) consiste en une polymérisation puis réticulation des monomères sources du polymère thermodurcissable, à température inférieure à ladite plage de températures du polymère ou co-polymère.

Ainsi, il est possible de réaliser l'étape de remplissage (2) du matériau ligno-cellulosique et d'initier l'étape de finition (3), qui est une précipitation du composé de remplissage dans celui-ci de façon quasi-simultanée.

**Etapes optionnelles de post-traitement (4) et/ou (5)**

Selon l'invention, le procédé de traitement peut comprendre en outre une étape de mise sous pression (4) de la structure issue de l'étape de finition (3). L'étape de mise sous pression (4) est typiquement effectuée à température de 50 à 250 °C, de préférence de 80 à 250°C pendant 5 à 30 minutes sous pression de 0,1 à 2,0 MPa (1 à 20 bar).

Cette étape de mise sous pression (4) peut être suivie d'une étape de finition de surface (ou traitement de surface) (5) de la structure issue de l'étape de mise sous pression (4). L'étape de finition de surface (5) peut typiquement être réalisée par voie chimique, par exemple au moyen d'acétate d'éthyle, ou par voie thermique et accompagnée d'une mise sous presse, auquel cas les étapes de mise sous pression (4) et de finition de surface (5) sont réalisées simultanément. Cela permet avantageusement d'aplanir les irrégularités de surface de la structure.

L'étape de finition de surface (5) peut également être réalisée sans réalisation préalable d'une étape (4). Dans ce cas elle peut être réalisée à base de traitement par vapeur avec de la vapeur d'acétone ou chlorure de méthaline.

**Structure**

La structure de matériau composite obtenue par le procédé selon l'invention est de façon générale avantageusement une structure de bonne résistance au feu, accrue par rapport au matériau ligno-cellulosique avant traitement (de par sa masse volumique augmentée et de par l'absence d'air - et donc d'oxygène - dans sa structure cellulaire densifiée), imputrescible (de par l'absence d'air dans sa structure cellulaire densifiée qui ne peut donc plus interagir avec l'humidité ambiante), de durabilité améliorée par rapport au matériau ligno-cellulosique avant traitement, et qui présente des caractéristiques mécaniques de résistance à la compression et à la flexion améliorées par rapport au matériau ligno-cellulosique natif avant traitement. Ces propriétés dépendent entre autres de la nature du composé de remplissage et du matériau ligno-cellulosique natif.

Selon un mode de réalisation préféré, la structure de matériau composite présente en majeure partie, voire en quasi-totalité, un indice de réfraction sensiblement homogène ou périodique, selon la nature du matériau ligno-cellulosique natif. Selon un mode de réalisation, la structure de matériau ligno-cellulosique composite est sensiblement transparente. Mais elle peut également être opaque. De préférence, la structure de matériau ligno-cellulosique composite est sensiblement translucide.

On entend par « *transparent* » la capacité qu'a un corps visuellement homogène à laisser passer au moins 90% de la lumière incidente. Cette mesure est effectuée par rapport à la transmission lumineuse directe pour un éclairage ambiant considéré, par comparaison entre la valeur (en lux) de l'éclairage ambiant et la valeur (en lux) du flux de transmission lumineuse obtenue après passage dans la structure.

On entend par « *translucide* » la capacité d'un corps à laisser passer entre 5% et 90% de la lumière incidente. Un corps translucide peut ne pas apparaître homogène. Dans le cadre de la présente invention, certaines zones moins délignifiées de la pièce du matériau ligno-cellulosique peuvent absorber les rayons lumineux incidents selon la structure du matériau ligno-cellulosique natif ; les zones davantage délignifiées auront, elles, tendance à apparaitre plus claires et à laisser passer la lumière plus facilement que les zones moins délignifiées. On entend par « *opaque* » la capacité qu'a un corps de ne laisser passer aucun rayon lumineux, par absorption ou par diffusion de la lumière au sein de sa structure. Une structure de matériau ligno-cellulosique natif est généralement un matériau opaque dans ses dimensions communes d'emploi. Si l'épaisseur de cette structure est réduite à moins de 500 $\mu$m, le matériau ligno-cellulosique natif est alors sous forme de feuille fragile et flexible, peut laisser passer un rayonnement incident, est être translucide de ce fait, malgré l'absence de traitement, mais le matériau ne présente pas les autres propriétés du matériau composite final.

Les rayons lumineux traversant le matériau peuvent ou non être déviés, peuvent ou non conserver leur direction de propagation initiale après avoir traversé la structure. Cette propriété optique est avantageusement obtenue par homogénéisation de l'indice optique du composé de remplissage transformé avec celui de la cellulose (en particulier l'alpha-cellulose) révélée au sein de la structure du matériau ligno-cellulosique du fait de l'étape de remplissage (2) et par création d'un continuum de matière lors de l'étape de finition (3). Cela procure à la structure une qualité optique supplémentaire, car tout ou partie d'un rayonnement incident peut être transmis à travers cette structure de matériau composite par homogénéisation de la densité optique.

La continuité des indices optiques n'est généralement pas parfaite à partir d'un certain volume de structure de matériau ligno-cellulosique. En effet selon le matériau ligno-cellulosique natif et le taux de délignification, l'extraction de la lignine du matériau ligno-cellulosique peut ne pas être uniforme selon les plans de ses faces et en profondeur, si bien que la délignification, et, par voie de conséquence, le rendu optique n'apparaît pas homogène. Par exemple, dans le cas de traitement de bois, selon les essences, les zones de bois d'été et de bois de printemps peuvent ne pas avoir la même nature ou ne pas être différenciées. Il en va de même pour l'aubier et le duramen pour certaines essences. Il est ainsi possible, pour certains bois, notamment ceux présentant des cernes de croissances annuelles (alternance de bois d'été et de printemps), que l'une des parties, souvent le bois d'été soient moins promptes à subir le traitement de l'étape d'extraction (1), laissant ainsi apparaitre après traitement par les étapes (2) et (3) des zones plus ou moins translucides, voire opaques. A contrario, en ce qui concerne des essences plus fragiles et généralement homogènes chimiquement, la réactivité de la structure face à l'étape (1) peut être sensiblement homogène rendant le matériau sensiblement uniformément translucide ou transparent. La propriété optique est généralement observée sur la structure de matériau composite.

Typiquement, la structure de matériau composite comprend au moins une dimension d'au moins 2 mm et d'au plus 40 cm. Ces 40 cm peuvent correspondre à l'épaisseur totale d'un panneau CLT. Cela peut ne pas correspondre strictement aux dimensions de la structure avant traitement selon le procédé de l'invention. En effet, des changements dimensionnels peuvent résulter du procédé d'une modification de la structure du matériau ligno-cellulosique au cours de l'étape (1), menant par exemple une déformation (légère torsion) ou une diminution de la taille du matériau composite par rapport au matériau ligno-cellulosique avant traitement, avec ou sans axe de déformation privilégié.

La structure du matériau composite possède une densité supérieure à celle du matériau ligno-cellulosique natif, par exemple de 5% à 1000% supérieure, de préférence de 10 à 200% supérieure, cette valeur dépendant notamment du matériau ligno-cellulosique, du taux de délignification et de la nature du composé de remplissage.

La structure de matériau composite obtenue selon le procédé de l'invention est de préférence un élément de finition, un élément de second œuvre ou un élément de premier œuvre.

Pour rappel, il existe trois types de coupes dans le bois :

- CLR (coupe longitudinale radiale)
- CT (coupe transversale)
- CLT (coupe longitudinale tangentielle).

Les différents types de coupes possibles cités plus haut ont été traités selon l'invention, même si les exemples qui suivent ne concernent que des coupes CT et CLR.

Il est à noter que selon l'invention, les coupes transversales et longitudinales, qui sont les coupes préférées, réagissent généralement de façon similaire au procédé.

Le choix de la coupe qui doit être privilégiée et traitée selon l'invention est fait par l'homme de métier selon l'application désirée : à titre d'exemple, pour des applications structurelles prenant avantage des propriétés mécaniques améliorées, la coupe CLR sera privilégiée tandis que pour des applications prenant avantage des propriétés optiques nouvelles ce sera la coupe CT qui sera privilégiée.

**Pièce**

La pièce comprenant la structure obtenue selon le procédé de l'invention peut être utilisée dans une grande variété d'utilisations en extérieur, auquel cas la pièce est généralement choisie parmi les soffites, les cadres de fenêtres, les portes et cadres de portes, les vérandas, les planches de rive, les abris de jardin, les terrasses (telles les platelages extérieurs et les dallages extérieurs) et les bâtiments à pans de bois (ou bardages bois), les aménagements urbains et similaires. Alternativement, la pièce peut être utilisée dans une grande variété d'utilisations en intérieur, auquel cas la pièce est généralement choisie parmi des éléments d'emballage (ou packaging) pour le luxe, des éléments de forme (ou design), des éléments de mobilier (tels que des meubles et produits de menuiserie voire contenants alimentaires tels que les bols de nourriture), des éléments d'intérieur automobile, des éléments d'intérieur de yachts ou de jets, des éléments nautiques, des éléments sportifs (tels que des skis), des éléments ou produits de grande consommation (telles que des lunettes de soleil ou des protections de téléphones), des éléments aéronautiques, et des éléments pour la construction.

**Figures**

L'invention sera mieux comprise à la vue des dessins annexés sur lesquels :

- la Figure 1 représente schématiquement les différentes étapes du procédé de traitement selon l'invention ;
- la Figure 2 représente schématiquement une installation de mise en œuvre de l'étape d'extraction (1) du procédé selon l'invention, en mode statique et en mode dynamique ;
- la Figure 3 représente schématiquement une installation de mise en œuvre de l'étape de remplissage (2) du procédé selon l'invention, en mode statique et en mode dynamique ;
- la Figure 4 représente un détail de la Figure 3 ; et

- la Figure 5 représente schématiquement l'étape de mise sous pression (5) du procédé selon l'invention.

Sur les Figures les éléments identiques sont représentés par les mêmes références.

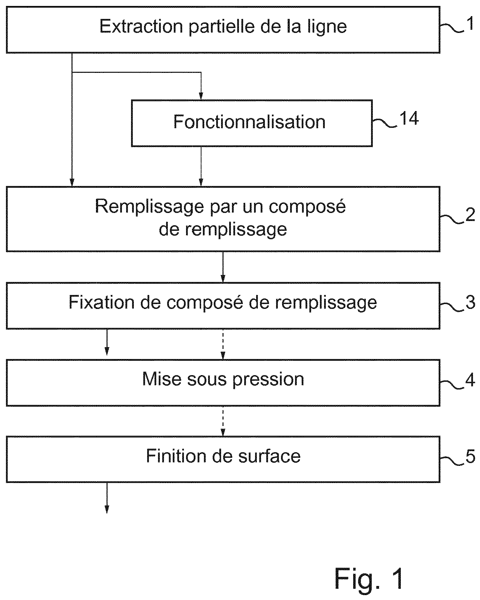

La Figure 1 représente schématiquement le procédé de traitement de structure de matériau ligno-cellulosique selon l'invention, par succession d'étapes, chacune étant représentée par une boîte. Les boîtes sont reliées entre elles par des flèches indiquant le passage d'une étape à la suivante. Chacune des boîtes correspond à l'étape portant le même numéro de référence du procédé selon l'invention, étant entendu que les références 4 et 5 sont des étapes optionnelles ainsi que le montrent les flèches en pointillés reliant les boîtes entre elles.

On distingue ainsi, dans l'ordre, une première étape d'extraction 1 réalisée sur la structure de matériau ligno-cellulosique. L'étape 1 réalise une dissolution partielle de la lignine dans la phase fluide et une évacuation subséquente de cette structure, dans les teneurs indiquées.

Cette étape d'extraction 1 peut être suivie d'une étape optionnelle intermédiaire de fonctionnalisation 14 du matériau ligno-cellulosique issu de l'étape d'extraction 1. Deux alternatives sont donc représentées : passage de 1 à 2 directement qui conduit à une structure partiellement délignifiée, ou passage de 1 à 2 indirectement, c'est-à-dire passage de 1 à 14 puis de 14 à 2, qui conduit à une structure partiellement délignifiée et fonctionnalisée.

La structure partiellement délignifiée et éventuellement fonctionnalisée issue de soit de l'étape d'extraction 1, soit de l'étape intermédiaire de fonctionnalisation 14, est ensuite remplie (ou imprégnée) par au moins un composé de remplissage dans une étape de remplissage 2.

L'étape suivante est une étape de fixation 3 du composé de remplissage dans la structure issue de l'étape de remplissage 2. Cela permet d'obtenir une structure de matériau composite formée d'un réseau tridimensionnel de composé de remplissage transformé incorporé dans un réseau de cellulose et de lignine. Cette étape 3 peut être suivie d'une étape de mise sous pression 4 de la structure issue de l'étape de finition 3, éventuellement elle-même suivie d'une étape de finition de la surface 5 de la structure issue de l'étape 4.

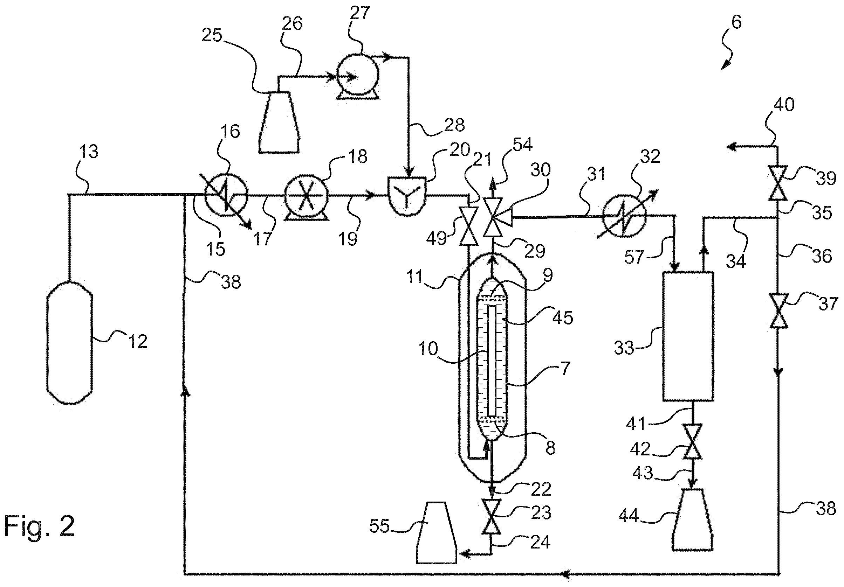

La Figure 2 représente schématiquement une installation 6 de mise en œuvre de l'étape d'extraction (1) du procédé selon l'invention sur une structure 10 de matériau ligno-cellulosique qui est en bois, par exemple de hêtre. L'installation 6 permet aussi bien une extraction en mode statique qu'une extraction en mode dynamique. Ainsi qu'il sera expliqué ci-après, la mise en œuvre de chacun de ces modes ne nécessite pas l'utilisation de tous les éléments de l'installation 6. L'installation 6 comporte une cellule haute pression 7 (pour l'extraction), un séparateur 33, un récipient de stockage 12 de fluide, à savoir du $CO_2$, ainsi qu'un récipient de stockage 25, qui sert ici à stocker du co-solvant, à savoir un co-solvant composé d'un mélange eau - éthanol.

L'installation 6 comprend également une pompe 27 de co-solvant, une pompe 18 de fluide, un mélangeur 20, un refroidisseur 16, et un réchauffeur 32. Le refroidisseur 16 est un échangeur de chaleur permettant par le contact indirect avec un fluide caloporteur de refroidir le fluide le traversant. Le réchauffeur 32 est un échangeur de chaleur permettant par le contact indirect avec un fluide caloporteur de réchauffer le fluide le traversant pour garder sa température constante.

L'installation 6 comporte également différents capteurs de température, de pression et de débit (non représentés).

La cellule haute pression 7 comporte un fritté 8 en position basse, apte à supporter la structure de matériau ligno-cellulosique 10, et un fritté 9 en position haute. Ces frittés 8 et 9 permettent que le matériau ligno-cellulosique reste à l'intérieur de la cellule haute pression 7 voire la pénétration homogène du fluide au sein de la cellule haute pression 7.

Une double enveloppe chauffante 11 est présente autour de la cellule haute pression 7 de façon à contrôler sa température. En mode statique, la double enveloppe 11 pourrait être remplacée par un réchauffeur.

Pour la mise en œuvre de l'étape d'extraction (1), que ce soit en mode statique ou en mode dynamique, la structure 10 est tout d'abord placée verticalement dans la cellule haute pression 7 sur le fritté 8.

En mode statique, la cellule haute pression 7 dans laquelle est placée la structure 10 est alimentée, dans un premier temps, en co-solvant de la façon suivante : le co-solvant présent dans le récipient 25 est conduit, par une conduite 26 jusqu'à la pompe 27 puis, *via* une conduite 28 au mélangeur 20 puis à la cellule 7 par une conduite 21, où il est mis en contact avec la structure 10 présente dans la cellule 7. Une vanne deux entrées 49 est présente sur la conduite 21, ce qui permet d'interrompre l'alimentation de la cellule 7 en co-solvant. Dans un second temps, le fluide destiné à être mis en phase supercritique ou subcritique et présent dans le récipient 12 (qui est, en l'occurrence, une bouteille de $CO_2$) est conduit, *via* une conduite 13 puis une conduite 15, au réchauffeur 16 puis via une conduite 17 à la pompe 18 puis via une conduite 19 au mélangeur 20 puis à la conduite 21, où il rejoint la cellule haute pression 7 qui contient la structure 10 et le co-solvant. Dans le cas du mode statique, le mélangeur 20 ne joue donc que le rôle d'une simple conduite, alimentée alternativement par le co-solvant puis par le fluide.

Enfin, la cellule haute pression 7 contenant la structure 10, le co-solvant et le fluide, est chauffée à l'aide de l'enveloppe chauffante 11 et pressurisée afin d'atteindre les conditions de pression et température désirées de façon à ce que le fluide passe en phase supercritique. Le fluide solubilise le co-solvant, puis la phase fluide contenant le co-solvant 45 diffuse au sein de la structure 10 et gonfle la structure 10, réalisant ainsi la solubilisation de la lignine.

A la fin de cette étape d'extraction, la cellule haute pression 7 est dépressurisée par une vanne trois voies 30 réalisant ainsi l'extraction partielle de la lignine. L'extrait contenant la lignine et d'éventuelles traces de co-solvant est alors récupéré par action d'une vanne 23 jusqu'au récipient de stockage 55. Ainsi, une conduite 22 le conduit à la vanne 23, puis une conduite 24 le conduit au récipient de stockage 55. En mode statique, une alternative est de récupérer l'extrait par la conduite 57.

La vanne 30, alimentée par une conduite 29 présente en positon haute de la cellule 7, permet d'évacuer le fluide sous forme de gaz par une conduite 54.

En mode dynamique, la cellule haute pression 7 est alimentée par un mélange du fluide destiné à être mis en phase supercritique et du co-solvant de la façon suivante : le co-solvant présent dans le récipient 25 est conduit, par le biais de la pompe 27 au mélangeur 20. Le fluide présent dans le récipient 12 est pompé jusqu'au mélangeur 20. Le mélangeur 20 réalise un mélange du fluide et du co-solvant qui est pompé par la pompe 49 dans la cellule 7, où il est mis en contact avec la structure 10. La vanne 30 est alors ouverte ce qui permet audit mélange de circuler jusqu'au séparateur 33 par la conduite 29, la vanne 30, une conduite 31, le réchauffeur 32, et une conduite 57. Ledit mélange circule ensuite par une conduite 34 (qui se divise en deux conduites 35 et 36), une conduite 36, une vanne 37, et une conduite 38, jusqu'en amont de la conduite 15 qu'il rejoint, et ainsi jusqu'à la cellule 7, réalisant ainsi une boucle de circulation de la phase fluide.

A la fin de cette étape d'extraction, la cellule haute pression 7 et le séparateur 33 sont dépressurisés par une vanne deux voies 39, alimentée par la conduite 35. Le séparateur 33 permet de récupérer l'extrait comprenant de la lignine et d'éventuelles traces de co-solvant par une conduite 41, une vanne 42, puis une conduite 43 jusqu'à un récipient de stockage 44. Le fluide est évacué à travers la conduite 34, puis la conduite 35 *via* la vanne 39 pour sortir sous forme de gaz par une conduite 40.

Les éléments de l'installation 6, et en particulier la cellule haute pression 7 et le séparateur 33 et les différentes conduites, sont nettoyés à la fin du procédé.

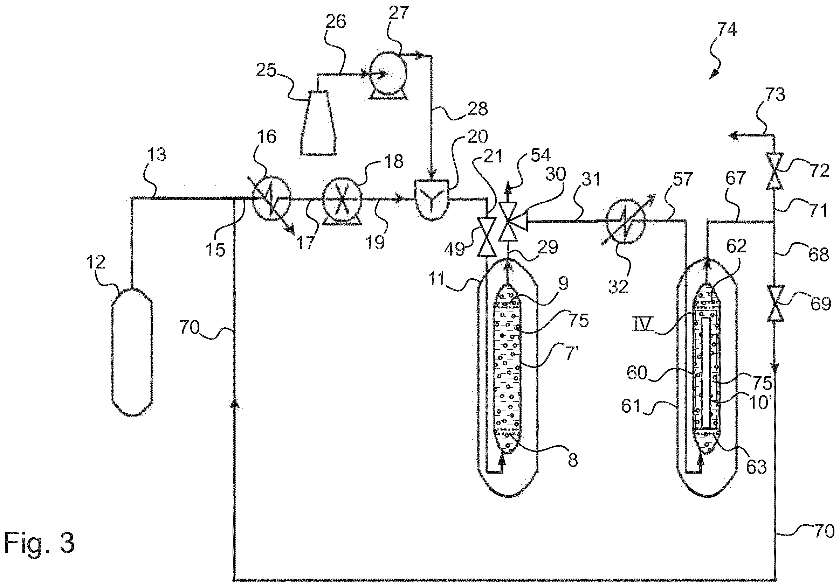

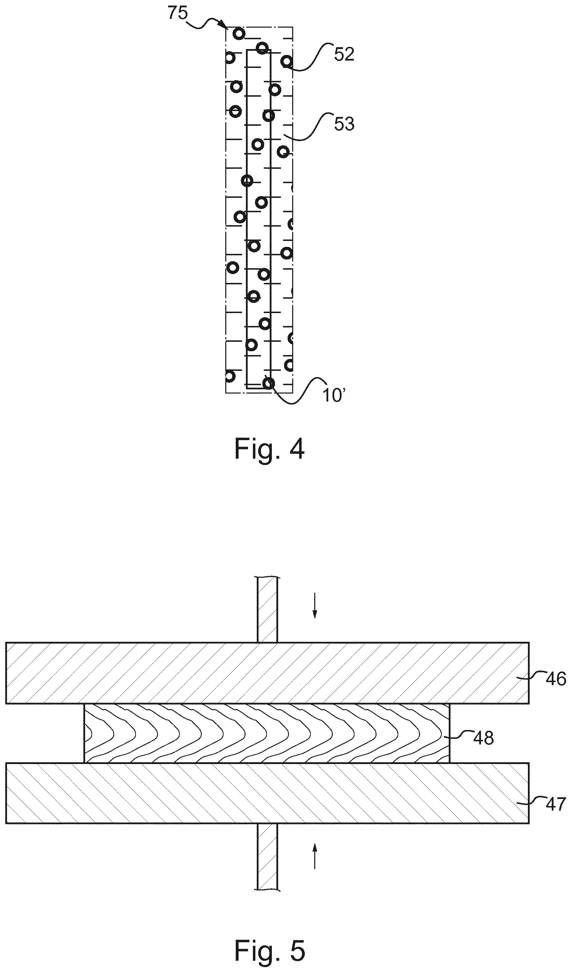

Les Figures 3 et 4 représentent schématiquement une installation 74 de mise en œuvre de l'étape de remplissage (2) du procédé selon l'invention, en mode statique ou en mode dynamique, la Figure 4 représentant un détail (IV) de la Figure 3.

L'installation 74 permet la mise en œuvre de l'étape de remplissage (2) sur une structure 10' de matériau ligno-cellulosique délignifiée ou bien délignifiée et fonctionnalisée. Cette structure 10' est en bois, par exemple de hêtre. Le composé de remplissage est ici un polymère.

L'installation 74 permet aussi bien un remplissage en mode statique qu'un remplissage en mode dynamique. Ainsi qu'il sera expliqué ci-après, la mise en œuvre de chacun de ces modes ne nécessite pas l'utilisation de tous les éléments de l'installation 74.

L'installation 74 comporte un saturateur (qui est une cellule haute pression) 7', une cellule haute pression 60 (dans laquelle l'imprégnation est réalisée), le récipient de stockage 12 de fluide, ici du $CO_2$, ainsi que le récipient de stockage 25, qui sert ici à stocker alternativement le composé de remplissage puis le co-solvant. Le saturateur 7' est semblable à la cellule 7 de la Figure 2 mais ne joue pas le même rôle que pour l'étape d'extraction illustrée en Figure 2, ce qui explique la différence de numérotation.

L'installation 74 comprend également la pompe 27, la pompe 18, le mélangeur 20, le refroidisseur 16, et le réchauffeur 32.

L'installation 74 comporte également différents capteurs de température, de pression et de débit (non représentés).

La cellule haute pression 60 comporte un fritté 63 en position basse, apte à supporter la structure de matériau ligno-cellulosique 10', et un fritté 62 en position haute. Ces frittés 63 et 62 permettent que le matériau ligno-cellulosique reste à l'intérieur de la cellule haute pression 60 voire la pénétration homogène du fluide au sein de la cellule 60. Une double enveloppe chauffante 61 est présente autour de la cellule haute pression 60 de façon à contrôler sa température. En mode statique, la double enveloppe 61 pourrait être remplacée par un réchauffeur.

Pour la mise en œuvre de l'étape de remplissage (2), que ce soit en mode statique ou en mode dynamique, la structure 10' est placée verticalement dans la cellule haute pression 60 sur le fritté 63, de façon à réaliser le remplissage proprement dit dans la cellule haute pression 60. Le saturateur 7' est alimenté, dans un premier temps, en composé de remplissage de la façon suivante : le composé de remplissage présent dans le récipient 25 est conduit, par la conduite 26 jusqu'à la pompe 27 puis, via la conduite 28 au mélangeur 20 puis par la conduite 21 au saturateur 7'. La vanne 49 présente sur la conduite 21 permet d'interrompre l'alimentation du saturateur 7' en composé de remplissage. Le saturateur 7' permet la solubilisation du co-solvant dans le fluide en phase supercritique.

En mode statique, dans un second temps, du co-solvant est mis dans le récipient de stockage 25, puis, de la même façon que pour le composé de remplissage, alimente le saturateur 7' *via* la pompe 27, le mélangeur 20, la conduite 21 et la vanne 49, où il rejoint le composé de remplissage.

Dans un troisième temps, le fluide destiné à être mis en phase supercritique ou subcritique et présent dans le récipient 12 est conduit, *via* la conduite 13 puis la conduite 15, au réchauffeur 16 puis par la conduite 17 à la pompe 18 puis via la conduite 19 au mélangeur 20 puis à la conduite 21, à partir de laquelle il rejoint le saturateur 7' qui contient le composé de remplissage et le co-solvant.

Dans le cas du mode statique, le mélangeur 20 ne joue donc que le rôle d'une simple conduite, alimentée successivement par le composé de remplissage, par le co-solvant puis par le fluide.

Enfin, la vanne 30 est ouverte ce qui permet la circulation du fluide présent dans le saturateur 7' par la conduite 31, le réchauffeur 32, puis la conduite 57, jusqu'à la cellule haute pression 60. Ensuite le saturateur 7' contenant le composé de remplissage, le co-solvant et le fluide, et la cellule 60, contenant la structure 10', sont respectivement chauffées à l'aide de l'enveloppe chauffante 11 et de l'enveloppe chauffante 61, et pressurisées afin d'atteindre les conditions de pression et température désirées de façon à ce que le fluide passe en phase supercritique. Le fluide en phase supercritique solubilise le co-solvant et le composé de remplissage, puis la phase fluide contenant le composé de remplissage et le co-solvant 75 gonfle la structure 10' tout en diffusant à l'intérieur, comme il est montré très schématiquement sur la Figure 4, réalisant ainsi l'imprégnation de la structure par le composé de remplissage 75.

Sur la Figure 4, on voit que le mélange 75 qui représente la phase supercritique est composé du fluide en phase supercritique 53 qui solubilise le composé de remplissage 52, symbolisé par des inclusions (petits cercles). Le mélange 75 gonfle la structure 10' tout en diffusant à l'intérieur et une quantité du composé de remplissage reste piégé au sein de la structure 10' lors de l'étape de dépressurisation (non représenté).

A la fin de cette étape de remplissage, le circuit comprenant le saturateur 7' et la cellule haute pression 60 est dépressurisé par une vanne deux voies 72. La vanne 72, alimentée par une conduite 67 (qui se divise en conduites 71 et 68) puis la conduite 71, permet d'évacuer le fluide sous forme de gaz par une conduite 73. Une structure de bois délignifiée et remplie est récupérée de la cellule haute pression 60.

En mode dynamique, le saturateur 7' comprenant le composé de remplissage est alimenté par un mélange du fluide destiné à être mis en phase supercritique et du co-solvant de la façon suivante : le co-solvant présent dans le récipient 25 est conduit, par le biais de la pompe 27 au mélangeur 20. Le fluide présent dans le récipient 12 est pompé jusqu'au mélangeur 20. Le mélangeur 20 réalise un mélange de fluide et de co-solvant qui est introduit par la vanne 49 dans le saturateur 7'. La vanne 30 est alors ouverte ce qui permet à la phase fluide contenant le co-solvant et le composé de remplissage de circuler du saturateur 7' jusqu'à la cellule 60, qui contient la structure 10', par la conduite 29, la vanne 30, la conduite 31, le réchauffeur 32, et la conduite 57. Ledit mélange circule ensuite par la conduite 67, la conduite 68, une vanne 69, et une conduite 70, jusqu'en amont de la conduite 15 qu'il rejoint, et ainsi jusqu'au saturateur 7', réalisant ainsi une boucle de circulation du fluide.

A la fin de cette étape de remplissage, la dépressurisation est effectuée par la vanne 72, et une structure de bois délignifiée et remplie est récupérée.

En mode statique, à la fin de cette étape de remplissage, la vanne 72 permet de dépressuriser la cellule haute pression 60 et le saturateur 7', et au besoin de récupérer le $CO_2$ en tant que gaz par la conduite 73. En mode statique, une alternative est de récupérer l'extrait par la conduite 57. D'autre part, la structure de bois délignifiée et remplie est récupérée.

La Figure 5 représente schématiquement l'étape de mise sous pression (5) du procédé selon l'invention. Dans ce cas, la structure de matériau composite 48 est compressée au sein d'un appareil de compression (46, 47) composée de deux mâchoires symétriques 46 et 47 pouvant se rapprocher l'une de l'autre en prenant la structure 48 intercalaire en étau. Sur chacune des pièces 46 et 47 est exercée une force axiale en regard de la force exercée sur l'autre pièce (les deux forces étant représentées par des flèches), les rapprochant ainsi l'une de l'autre. L'invention sera mieux comprise à la vue des exemples de réalisation qui suivent, en référence aux dessins annexés.

## Exemples

Les exemples qui suivent illustrent l'invention sans pour autant en limiter la portée.

**Exemple 1** : **Procédé de traitement selon l'invention dans lequel l'étape (1) est réalisée par utilisation de $CO_2$ supercritique en mode statique en présence d'un mélange 50% eau - 50% éthanol (% volume)**

Une structure de bois sec de coupe transversale de hêtre de dimensions 17 mm x 17 mm x 9 mm (l x L x h) a été soumise au procédé de traitement selon l'invention en mode statique dans l'installation 6 de la Figure 2 en présence d'un co-solvant eau-éthanol.

L'étape d'extraction (1) a été menée dans des conditions de pression de 1,76 MPa (17,6 bar), de température de 180°C, une quantité de co-solvant 50 % eau - 50% éthanol (% volume) et pour une durée de traitement de 2h.

A l'issue de cette étape d'extraction (1), la cellule haute pression (0,5 L) a été dépressurisée et le morceau de bois ainsi que l'extrait qui contient la lignine ont été récupérés.

Les étapes de remplissage (2) et de finition (3) de la structure de matériau ligno-cellulosique ainsi obtenue ont été réalisées au moyen du dispositif représenté sur la Figure 3.

L'étape de remplissage (2) a été conduite selon son second mode de réalisation, par imprégnation en phase supercritique, en mode statique. Ainsi, une solution monomérique composée d'une part de méthacrylate de butyle et de trois parts de styrène, après la purification de ces composés à l'aide d'une poudre à filtrer faite de diatomite, a été préparée. La solution monomérique a été mélangée à 0,05 part de catalyseur (asobisisobutyronitrile).

La solution monomérique dissoute dans le $CO_2$ supercritique est introduite dans la cellule haute pression 60 contenant la structure de matériau ligno-cellulosique. A la fin de cette étape de remplissage (2), la cellule haute pression 60 a été dépressurisée par la vanne de dépressurisation 72. La structure de matériau ligno-cellulosique imprégnée de monomère a été récupérée.

Cette étape de remplissage a été suivie par une étape de finition (3) au cours de laquelle les monomères méthacrylates de butyle et styrène remplissant la structure de matériau ligno-cellulosique à l'issue de l'étape de remplissage (2) ont été polymérisés thermiquement (80°C) sous atmosphère inerte, pendant 20 à 24 heures.

**Exemple 2 : Procédé de traitement selon l'invention dans lequel l'étape (1) est réalisée par utilisation de $CO_2$ supercritique en mode dynamique présence d'un mélange co-solvant 50% eau-50% éthanol (% volume)**

Une structure (planche) de bois sec de coupe transversale de hêtre de dimensions 200 mm x 90 mm x 18 mm (l x L x h) a été traitée par l'étape d'extraction partielle de lignine du procédé selon l'invention en mode dynamique et en présence d'un co-solvant eau/éthanol.

L'extraction a été réalisée dans des conditions de pression de 2,02 MPa (202 bar), de température de 118°C durant 2h. Le $CO_2$ et le mélange eau/éthanol ont été introduits dans la cellule haute pression (2 L) *via* des pompes en continu avec un débit de 100 g/min et 5,34 g/min respectivement.

A l'issue de cette étape d'extraction (1), la cellule haute pression a été dépressurisée et la planche de bois ainsi que l'extrait qui contient la lignine ont été récupérés.

Les étapes de remplissage (2) et de finition (3) de la structure de matériau ligno-cellulosique ainsi obtenue ont été réalisées de façon identique à celles décrites dans l'Exemple 1.

**Exemple 3 : Procédé de traitement selon l'invention dans lequel l'étape (1) est réalisée par voie supercritique et enzymatique**

Une structure de bois sec de dimensions 17 mm x 17 mm x 10 mm a été prétraité selon l'invention par $CO_2$ supercritique dans des conditions de pression de 20 MPa (200 bar), de température de 165°C et durant 3h en mode statique.

La structure de matériau ligno-cellulosique prétraitée a été ensuite placée dans une solution qui contient l'enzyme laccase à une concertation de 5g/L dans des conditions de température de 50°C, durant 48 h et sous agitation (100 trs/min). Le pH de la solution enzymatique a été ajusté à l'aide d'une solution tampon afin de garder sa valeur entre 4,7 et 5.

Le bois traité et l'extrait (qui contient la lignine) ont été récupérés à la fin du traitement enzymatique et ont été par la suite séchés à l'étuve afin de les caractériser.

Les étapes de remplissage (2) et de finition (3) de la structure de matériau ligno-cellulosique ainsi obtenue ont été réalisées de façon identique à celles décrites dans l'Exemple 1.

**Revendications**

1. Procédé de traitement d'une structure de matériau ligno-cellulosique, le matériau ligno-cellulosique étant de préférence du bois, ledit procédé comprenant les étapes successives suivantes :

    (1) au moins une étape d'extraction de lignine d'une structure de matériau ligno-cellulosique par au moins un fluide en phase supercritique ou subcritique dans une cellule haute pression, la lignine étant partiellement extraite ;
    (2) au moins une étape de remplissage de la structure partiellement délignifiée par au moins un composé de remplissage, de sorte à produire une structure partiellement délignifiée remplie ; et
    (3) au moins une étape de finition de la structure partiellement délignifiée remplie, de sorte à obtenir une structure de matériau composite formée d'un réseau tridimensionnel de composé de remplissage transformé incorporé dans un réseau de cellulose et de lignine,

    la masse volumique de la structure de matériau composite obtenue étant supérieure à celle de la structure de matériau ligno-cellulosique avant traitement.

2. Procédé de traitement selon la revendication 1, dans lequel, à l'étape (1), la lignine est extraite en teneur de 40 à 85%, en % poids, par rapport à la lignine initialement présente dans le matériau.

3. Procédé de traitement selon la revendication 1 ou 2, dans lequel la structure de matériau ligno-cellulosique est un élément de finition, un élément de second œuvre ou un élément de premier œuvre.

4. Procédé de traitement selon l'une des revendications 1 à 3, dans lequel le matériau ligno-cellulosique est du bois vert, du bois humide ou du bois sec, de préférence du bois vert.

5. Procédé de traitement selon l'une des revendications 1 à 4, comprenant en outre une étape intermédiaire de fonctionnalisation de la structure partiellement délignifiée issue de l'étape (1), située entre l'étape d'extraction (1) et l'étape de remplissage (2), qui est une étape d'activation des groupes hydroxyles ou bien une étape d'oxydation.

6. Procédé de traitement selon l'une des revendications 1 à 5, dans lequel le fluide en phase supercritique ou subcritique de l'étape d'extraction (1) est choisi parmi :

- du dioxyde de carbone $CO_2$ en phase supercritique, de préférence mélangé à au moins un co-solvant polaire choisi parmi le dioxane, l'eau, le méthanol, l'éthanol, l'acide acétique, l'acétone et leurs mélanges ;
- au moins un alcool en phase supercritique, ledit alcool étant choisi parmi le t-butanol et l'isopropanol ;
- de l'eau en phase subcritique, de préférence mélangée à au moins une base ou au moins un acide.

7. Procédé de traitement selon l'une des revendications 1 à 6, dans lequel l'étape d'extraction (1) est effectuée en utilisant le dioxyde de carbone ($CO_2$) en phase supercritique en mode dynamique ou en mode statique, pendant 2 à 72 h, à une pression de 8 à 40 MPa (80 à 400 bar), et à une température comprise entre 50 et 200°C.

8. Procédé de traitement selon l'une des revendications 1 à 7, dans lequel le fluide en phase supercritique ou subcritique de l'étape d'extraction (1) est le dioxyde de carbone ($CO_2$) en phase supercritique, mélangé à un mélange d'eau et d'éthanol dans une proportion comprise entre 30% eau - 70% éthanol à 70% eau - 30% éthanol, de préférence égale à 50% eau - 50% éthanol (en % volume).

9. Procédé de traitement selon l'une des revendications 1 à 8, dans lequel l'étape d'extraction (1) est réalisée en présence d'au moins une enzyme choisie dans le groupe formé par la laccase, la lignine peroxydase (LiP), la manganèse peroxydase (MnP) et la xylanase, ladite enzyme étant présente dans le fluide en phase supercritique ou subcritique.

10. Procédé de traitement selon la revendication 9, dans lequel le fluide en phase supercritique ou subcritique comprend en outre au moins un catalyseur choisi parmi le 2,2'-azino-di(3-éthylbenzothiazolin-6-acide sulfonique) (ou ABTS), le 1-hydroxybenzotriazole (HBT), la N-hydroxyphthalimide (HPI), la N-hydroxy-N-phénylacétamide (NHA), la (2,2,6,6-tétraméthylpipéridin-1-yl)oxy (TEMPO), l'acide violurique, et leurs mélanges.

11. Procédé de traitement selon l'une des revendications 1 à 10, dans lequel l'étape de remplissage (2) est réalisée dans une cellule haute pression en présence d'au moins un fluide en phase supercritique ou subcritique dans lequel le composé de remplissage est solubilisé.

12. Procédé de traitement selon l'une des revendications 1 à 10, dans lequel l'étape de remplissage (2) est réalisée en présence d'un fluide en phase supercritique ou subcritique dans lequel est solubilisée une solution monomérique comprenant le composé de remplissage.

13. Procédé de traitement selon la revendication 12, dans lequel la solution monomérique de l'étape de remplissage (2) comprend au moins un monomère choisi parmi :

- les monomères issus du pétrole parmi lesquels les méthacrylates ; les phtalates ; les nitriles ; le styrène et les dérivés styréniques ; les composés vinyliques ; les composés éthyléniques ; le butadiène ; l'isoprène ; et leurs mélanges ; et
- les monomères biosourcés parmi lesquels les terpènes ; le glycérol et les dérivés du glycérol ; les dérivés des sucres ; les dérivés du furfural ; les dérivés des acides lactique et formique ; les monomères issus de l'huile de ricin ; les acides hydroxyalcanoïques ; le bio-éthylène ; le bio-éthylène glycol ; le bio-propylène ; le bio-1,4-butanediol ; les dérivés de la lignine ; et leurs mélanges ;

et leurs mélanges.

14. Procédé de traitement selon l'une des revendications 1 à 13, dans lequel la lignine dissoute récupérée dans le fluide de l'étape d'extraction (1) est utilisée dans un procédé de valorisation de la lignine pour la fabrication d'un matériau de construction, d'un matériau utilisé en aéronautique, d'un matériau d'emballage, d'un biocarburant, d'un composé pharmaceutique ou d'un composé chimique.

15. Procédé de traitement selon l'une des revendications 1 à 14, dans lequel le matériau ligno-cellulosique est du bois de résineux et de 50 à 85%, de préférence de 50 à 75%, en % poids, de la lignine présente dans la structure est extraite au cours de l'étape d'extraction (1).

16. Procédé de traitement selon l'une des revendications 1 à 14, dans lequel le matériau ligno-cellulosique est du bois de feuillus et de 40 à 60%, de préférence de 45 à 55%, en % poids, de la lignine présente dans la structure est extraite au cours de l'étape d'extraction (1).

**Patentansprüche**

1. Verfahren zur Verarbeitung einer Struktur aus lignozellulosehaltigem Material, wobei das lignozellulosehaltige Material vorzugsweise Holz ist, wobei das Verfahren die folgenden aufeinanderfolgenden Schritte umfasst:

   (1) mindestens einen Schritt des Extrahierens von Lignin aus einer Struktur aus lignozellulosehaltigem Material durch mindestens ein Fluid in einer überkritischen oder unterkritischen Phase in einer Hochdruckzelle, wobei das Lignin teilweise extrahiert wird;
   (2) mindestens einen Schritt des Füllens der teilweise delignifizierten Struktur mit mindestens einer Füllverbindung, so dass eine gefüllte teildelignifizierte Struktur erzeugt wird; und
   (3) mindestens einen Schritt des Endbearbeitens der gefüllten teilweise delignifizierten Struktur, so dass eine Struktur aus Verbundmaterial erhalten wird, die aus einem dreidimensionalen Netz aus umgewandelter Füllverbindung gebildet wird, die in ein Netz aus Zellulose und Lignin eingebettet ist,

   wobei die Volumenmasse der erhaltenen Struktur aus dem Verbundmaterial höher ist als die der Struktur aus lignozellulosehaltigem Material vor der Verarbeitung.

2. Verarbeitungsverfahren nach Anspruch 1, wobei in Schritt (1) das Lignin in einem Gehalt von 40 bis 85 Gew.-%, bezogen auf das ursprünglich im Material vorhandene Lignin, extrahiert wird.

3. Verarbeitungsverfahren nach Anspruch 1 oder 2, wobei die Struktur aus lignozellulosehaltigem Material ein Endbearbeitungselement, ein Ausbauelement oder ein Rohbauelement ist.

4. Verarbeitungsverfahren nach einem der Ansprüche 1 bis 3, wobei das lignozellulosehaltige Material Frischholz, feuchtes Holz oder Trockenholz, vorzugsweise Frischholz, ist.

5. Verarbeitungsverfahren nach einem der Ansprüche 1 bis 4, ferner umfassend einen Zwischenschritt des Funktionalisierens der aus Schritt (1) stammenden teilweise delignifizierten Struktur, der sich zwischen dem Extraktionsschritt (1) und dem Füllschritt (2) befindet und der ein Schritt des Aktivierens der Hydroxylgruppen oder ein Oxidationsschritt ist.

6. Verarbeitungsverfahren nach einem der Ansprüche 1 bis 5, wobei das Fluid in der überkritischen oder unterkritischen Phase des Extraktionsschritts (1) aus Folgendem ausgewählt ist:

   - Kohlendioxid $CO_2$ in der überkritischen Phase, vorzugsweise gemischt mit mindestens einem polaren Hilfslösungsmittel, ausgewählt aus Dioxan, Wasser, Methanol, Ethanol, Essigsäure, Aceton und deren Mischungen;
   - mindestens einen Alkohol in der überkritischen Phase, wobei der Alkohol aus t-Butanol und Isopropanol ausgewählt ist;
   - Wasser in der unterkritischen Phase, vorzugsweise gemischt mit mindestens einer Basis oder mindestens einer Säure.

7. Verarbeitungsverfahren nach einem der Ansprüche 1 bis 6, wobei der Extraktionsschritt (1) unter Verwendung von

Kohlendioxid (CO$_2$) in der überkritischen Phase im dynamischen Modus oder im statischen Modus für 2 bis 72 h bei einem Druck von 8 bis 40 MPa (80 bis 400 bar) und einer Temperatur zwischen 50 und 200 °C durchgeführt wird.

8. Verarbeitungsverfahren nach einem der Ansprüche 1 bis 7, wobei das Fluid in der überkritischen oder unterkritischen Phase des Extraktionsschritts (1) Kohlendioxid (CO2) in der überkritischen Phase ist, gemischt mit einem Gemisch aus Wasser und Ethanol in einem Verhältnis von 30 % Wasser - 70 % Ethanol zu 70 % Wasser - 30 % Ethanol, vorzugsweise gleich 50 % Wasser - 50 % Ethanol (in Vol.-%).

9. Verarbeitungsverfahren nach einem der Ansprüche 1 bis 8, wobei der Extraktionsschritt (1) in Gegenwart von mindestens einem Enzym durchgeführt wird, das aus der Gruppe ausgewählt ist, die aus Laccase, Ligninperoxidase (LiP), Manganperoxidase (MnP) und Xylanase besteht, wobei das Enzym in der überkritischen oder unterkritischen Phase im Fluid vorhanden ist.

10. Verarbeitungsverfahren nach Anspruch 9, wobei das Fluid in der überkritischen oder unterkritischen Phase ferner mindestens einen Katalysator umfasst, der aus 2,2'-Azino-di(3-ethylbenzothiazolin-6-sulfonsäure) (oder ABTS), 1-Hydroxybenzotriazol (HBT), N-Hydroxyphthalimid (HPI), N-Hydroxy-N-phenylacetamid (NHA), (2,2,6,6-Tetramethylpiperidin-1-yl)oxy (TEMPO), Violininsäure und deren Mischungen ausgewählt ist.

11. Verarbeitungsverfahren nach einem der Ansprüche 1 bis 10, wobei der Füllschritt (2) in einer Hochdruckzelle in Gegenwart von mindestens einem Fluid in der überkritischen oder unterkritischen Phase durchgeführt wird, in dem die Füllverbindung gelöst wird.

12. Verarbeitungsverfahren nach einem der Ansprüche 1 bis 10, wobei der Füllschritt (2) in Gegenwart von einem Fluid in der überkritischen oder unterkritischen Phase durchgeführt wird, in dem eine Monomerlösung, die die Füllverbindung umfasst, gelöst wird.

13. Verarbeitungsverfahren nach Anspruch 12, wobei die Monomerlösung des Füllschritts (2) mindestens ein Monomer umfasst, das aus Folgendem ausgewählt ist:

    - Monomere aus Erdöl, darunter Methacrylate; Phthalate; Nitrile; Styrol und Styrolderivate; Vinylverbindungen; Ethylenverbindungen; Butadien; Isopren; und deren Mischungen; und
    - biobasierte Monomere, darunter Terpene; Glycerin und Glycerinderivate; Zuckerderivate; Fufuralderivate; Milch- und Ameisensäurederivate; Monomere aus Rizinusöl; Hydroxyalkanolsäuren; Bioethylen; Bioethylenglykol; Biopropylen; Bio-1,4-Butandiol; Ligninderivate; und deren Mischungen;

    und deren Mischungen.

14. Verarbeitungsverfahren nach einem der Ansprüche 1 bis 13, wobei das aus dem Fluid des Extraktionsschritts (1) gewonnene gelöste Lignin in einem Verfahren zur Verwertung von Lignin für die Herstellung eines Baumaterials, eines in der Luftfahrt verwendeten Materials, eines Verpackungsmaterials, eines Biokraftstoffs, einer pharmazeutischen Verbindung oder einer chemischen Verbindung verwendet wird.

15. Verarbeitungsverfahren nach einem der Ansprüche 1 bis 14, wobei das lignozellulosehaltige Material Nadelholz ist und 50 bis 85 %, vorzugsweise 50 bis 75 %, des in der Struktur vorhandenen Lignins während des Extraktionsschritts (1) extrahiert wird.

16. Verarbeitungsverfahren nach einem der Ansprüche 1 bis 14, wobei das lignozellulosehaltige Material Laubholz ist und 40 bis 60 %, vorzugsweise 45 bis 55 Gew.-%, des in der Struktur vorhandenen Lignins während des Extraktionsschritts (1) extrahiert wird.

**Claims**

1. A process for treating a structure of lignocellolosic material, the lignocellolosic material being preferably wood, said process comprising the following successive steps:

    (1) at least one step of extracting lignin from a structure of lignocellulosic material by at least one fluid in supercritical or subcritical phase in a high-pressure cell, the lignin being partially extracted;

(2) at least one step of filling the partially delignified structure with at least one filling compound, so as to produce a filled partially delignified structure; and

(3) at least one step of finishing the filled partially delignified structure, so as to obtain a composite material structure formed of a three-dimensional network of transformed filling compound incorporated in a network of cellulose and lignin,

the mass per unit volume of the obtained composite material structure being higher than that of the ligno-cellulosic material structure before treatment.

2. A treatment process according to claim 1, wherein, in step (1), the lignin is extracted in an amount from 40 to 85%, by weight %, relative to the lignin initially present in the material.

3. A treatment process according to claim 1 or 2, wherein the structure of lignocellulosic material is a trimming member, a finishing member or a structure member.

4. A treatment process according to one of claims 1 to 3, wherein the lignocellulosic material is green wood, damp wood or dry wood, preferably green wood.

5. A treatment process according to one of claims 1 to 4, further comprising an intermediate step of functionalizing the partially delignified structure resulting from step (1), situated between the extracting step (1) and the filling step (2), which is a step of activating hydroxyl groups or an oxidizing step.

6. A treatment process according to one of claims 1 to 5, wherein the fluid in supercritical or subcritical phase of extracting step (1) is chosen from:

- carbon dioxide $CO_2$ in supercritical phase, preferably mixed with at least one polar cosolvent chosen from dioxane, water, methanol, ethanol, acetic acid, acetone and mixtures thereof;
- at least one alcohol in supercritical phase, said alcohol being chosen from t-butanol and isopropanol;
- water in subcritical phase, preferably mixed with at least one base or at least one acid.

7. A treatment process according to one of claims 1 to 6, wherein the extracting step (1) is carried out using carbon dioxide ($CO_2$) in supercritical phase in dynamic mode or in static mode, for 2 to 72h, at a pressure of 8 to 40 MPa (80 to 400 bar), and at a temperature comprised between 50 and 200°C.

8. A treatment process according to one of claims 1 to 7, wherein the fluid in supercritical or subcritical phase of the extracting step (1) is carbon dioxide ($CO_2$) in supercritical phase, mixed with a mixture of water and ethanol in a proportion comprised between 30% water - 70% ethanol, to 70% water - 30% ethanol preferably equal to 50% water - 50% ethanol (in volume %).

9. A treatment process according to one of claims 1 to 8, wherein the extracting step (1) is carried out in the presence of at least one enzyme chosen from the group formed by laccase, lignin peroxidase (LiP), managanese peroxidase (MnP) and xylanase, said enzyme being present in the fluid in supercritical or subcritical phase.

10. A treatment process according to claim 9, wherein the fluid in supercritical or subcritical phase further comprises at least one catalyst chosen from 2,2'-azino-di(3-ethylbenzothiazolin-6-sulfonic acid) (or ABTS), 1-hydroxybenzotriazole (HBT), N-hydroxyphthalimide (HPI), N-hydroxy-phenylacetamide (NHA), (2,2,6,6-tetramethylpiperidine-1-yl) oxy (TEMPO), violuric acid, and mixtures thereof.

11. A treatment process according to one of claims 1 to 10, wherein the filling step (2) is carried out in a high-pressure cell in the presence of at least one fluid in supercritical or subcritical phase in which the filling compound is solubilized.

12. A treatment process according to one of claims 1 to 10, wherein the filling step (2) is carried out in the presence of a fluid in supercritical or subcritical phase in which is solubilized a monomeric solution comprising the filling compound.

13. A treatment process according to claim 12, wherein the monomeric solution of the filling step (2) comprises at least one monomer chosen from:

- monomers produced from petroleum among which are methacrylates, phthalates; nitriles; styrene and styrenic derivatives; vinyl compounds; ethylenic compounds; butadiene; isoprene; and mixtures thereof; and

- bio-sourced monomers among which are terpenes; glycerol and glycerol derivatives; derivatives of sugars; furfural derivatives; lactic and formic acid derivatives; monomers produced from castor oil; hydroxyalkanoic acids; bio-ethylene; bio-ethylene glycol; bio-propylene; bio1,4-butanediol; lignin derivatives; and mixtures thereof;

and mixtures thereof.

14. A treatment process according to one of claims 1 to 13, wherein the dissolved lignin recovered from the fluid of extracting step (1) is used in a process for exploiting the lignin for the manufacture of a construction material, of a material used in aeronautics, of a packaging material, of a biofuel, of a pharmaceutical compound or of a chemical compound.

15. A treatment process according to one of claims 1 to 14, wherein the lignocellulosic material is softwood and 50 to 85%, preferably 50 to 75%, by weight %, of the lignin present in the structure is extracted during the extracting step (1).

16. A treatment process according to one of claims 1 to 14, wherein the lignocellulosic material is hardwood and 40 to 60%, preferably 45 to 55%, by weight %, of the lignin present in the structure is extracted during the extracting step (1).

Extraction partielle de la ligne ⟩ 1

Fonctionnalisation ⟩ 14

Remplissage par un composé
de remplissage ⟩ 2

Fixation de composé de remplissage ⟩ 3

Mise sous pression ⟩ 4

Finition de surface ⟩ 5

Fig. 1

Fig. 2

EP 3 634 703 B1

Fig. 3

32

Fig. 4

Fig. 5

**RÉFÉRENCES CITÉES DANS LA DESCRIPTION**

**Documents brevets cités dans la description**

- WO 9002612 A
- WO 2010089604 A
- WO 2017098149 A1

**Littérature non-brevet citée dans la description**

- **LUCE F**. Delignified impregnated wood. *Mechanical Engineering*, 01 October 1944, vol. 66 (10), 654-655